(19) Europäisches Patentamt
European Patent Office
Office européen des brevets

(11) EP 4 737 493 A1

(12) **EUROPEAN PATENT APPLICATION**
published in accordance with Art. 153(4) EPC

(43) Date of publication:
**06.05.2026 Bulletin 2026/19**

(21) Application number: **24831757.0**

(22) Date of filing: **17.06.2024**

(51) International Patent Classification (IPC):
***C08F 255/00*** (2006.01) ***C08F 2/44*** (2006.01)
***C08L 23/26*** (2025.01) ***C08L 101/00*** (2006.01)
***C09D 5/00*** (2006.01) ***C09D 11/102*** (2014.01)
***C09D 11/106*** (2014.01) ***C09D 123/00*** (2006.01)
***C09D 163/10*** (2006.01) ***C09D 167/06*** (2006.01)
***C09D 175/14*** (2006.01) ***C09J 123/00*** (2006.01)
***C09J 163/10*** (2006.01) ***C09J 167/06*** (2006.01)
***C09J 175/14*** (2006.01)

(52) Cooperative Patent Classification (CPC):
**C08F 2/44; C08F 255/00; C08L 23/26; C08L 101/00; C09D 5/00; C09D 11/102; C09D 11/106; C09D 123/00; C09D 163/10; C09D 167/06; C09D 175/14; C09J 123/00; C09J 163/10; C09J 167/06; C09J 175/14**

(86) International application number:
**PCT/JP2024/021938**

(87) International publication number:
**WO 2025/004895 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023108495**

(71) Applicant: **TOYOBO MC Corporation**
**Osaka-shi, Osaka 530-0001 (JP)**

(72) Inventors:
- **YAMASAKI, Hokuto**
  **Takasago-shi, Hyogo 676-0082 (JP)**
- **KASHIHARA, Kenji**
  **Takasago-shi, Hyogo 676-0082 (JP)**

(74) Representative: **Vossius & Partner Patentanwälte Rechtsanwälte mbB**
**Siebertstraße 3**
**81675 München (DE)**

(54) **MODIFIED POLYOLEFIN RESIN COMPOSITION AND USE FOR SAID RESIN COMPOSITION**

(57) The present invention provides a modified polyolefin resin composition that exhibits excellent water resistance, excellent bending resistance, sufficient fluidity within a specific temperature range, and excellent adhesion to polyolefin substrates. Specifically, the present invention provides a modified polyolefin resin composition containing an acid-modified polyolefin resin (A) and a compound having a polymerizable unsaturated group (B), in which the compound having a polymerizable unsaturated group (B) contains a compound having a polymerizable unsaturated group with an elongation at break of 30% or more (B-1).

EP 4 737 493 A1

## Description

Technical Field

The present invention relates to a modified polyolefin resin composition and use of the modified polyolefin resin composition.

Background Art

Polyolefin resins such as polypropylene and polyethylene have been widely used in materials in fields such as automotive parts, electrical components, building materials, and packaging films, due to their relatively low cost and excellent properties, such as chemical resistance, water resistance, and heat resistance.

However, polyolefin resins generally have high crystallinity and low polarity, which may make it difficult for materials such as paint, printing ink, and adhesives to adhere to them.

To address this issue, a widely known method has been used: the method includes spray-coating a paint containing an organic solvent, an aqueous solvent, or other solvents by using various primers such as chlorinated polyolefin resins and acrylic resins, which adhere well to polyolefin resin (e.g., PTL 1).

However, from an environmental perspective, the method disclosed in PTL 1 may not be desirable because of the organic solvents released into the atmosphere during spray coating.

Therefore, in-mold coating, in which coating is performed inside a mold, has been attracting attention as an alternative coating method for spray coating. In-mold coating is a technique in which paint is injected into the gap between the surface of a molded plastic article and the mold surface within the mold, and then the paint is cured by heat or other means inside the mold to form a coating film.

For example, PTL 2 discloses a method for producing an in-mold-coated injection-molded article by coating an injection-molded article made of thermoplastic resin as a raw material resin in a mold. The method includes a primary molding step of injecting a heat-melted raw material resin into a cavity formed of a set of molds composed of a movable mold and a fixed mold, which are equipped with a heating device and a cooling device, to form a primary molded article; a coating material injection step of relatively separating the movable mold and the fixed mold to ensure a secondary space between the movable mold and the primary molded article, and injecting a coating material into this secondary space; a heat-curing step of heating the mold with the heating device to cure the injected coating material; and a cooling step of cooling the mold with the cooling device.

Citation List

Patent Literature

PTL 1: JP2002-201236A

PTL 2: JP2003-19731A

Summary of Invention

Technical Problem

However, the in-mold-coated injection-molded article obtained according to the production method described in PTL 2 may be unsatisfactory in terms of adhesion to polyolefin substrates and bending resistance.

The present invention has been made in view of the problems above, and an object of the present invention is to provide a modified polyolefin resin composition that has excellent water resistance, excellent bending resistance, sufficient fluidity within a specific temperature range, and excellent adhesion to polyolefin substrates.

Solution to Problem

With the aim of achieving the object above, the present inventors conducted extensive research on dispersing and/or dissolving acid-modified polyolefin resin in a compound having a polymerizable unsaturated group, and found that a modified polyolefin resin composition containing an acid-modified polyolefin resin and a compound having a polymerizable unsaturated group with specific physical properties can achieve the object, thus arriving at the present

invention.

The present invention encompasses, for example, the subject matter described in the following item.

Item 1. A modified polyolefin resin composition comprising an acid-modified polyolefin resin (A) and a compound having a polymerizable unsaturated group (B),

wherein the compound having a polymerizable unsaturated group (B) comprises a compound having a polymerizable unsaturated group with an elongation at break of 30% or more (B-1).

Advantageous Effects of Invention

The modified polyolefin resin composition of the present invention has excellent water resistance, excellent bending resistance, sufficient fluidity within a specific temperature range, and excellent adhesion to polyolefin substrates. Because of its sufficient fluidity within a specific temperature range, the modified polyolefin resin composition of the present invention thus can be suitably used as a liquid modified polyolefin resin composition for various applications.

Description of Embodiments

Preferred embodiments of the present invention will be described in detail below. The following description of technical elements may be based on representative embodiments and specific examples; however, the present invention is not limited to such embodiments.

In the present specification, the terms "comprise" and "contain" include the concepts of comprising, containing, consisting essentially of, and consisting of.

In the numerical ranges described in stages in the present specification, the upper or lower limit value of a numerical range of a certain stage can be freely combined with the upper or lower limit value of a numerical range of another stage. In any numerical range described in the present specification, the upper or lower limit value of the numerical range may be replaced with a value shown in the Examples or a value that can be unambiguously derived from the Examples. Furthermore, in the present specification, a numerical value connected with "to" means a numerical range including the numerical values before and after "to" as the lower and upper limit values.

In the present specification, "A and/or B" means "one of A or B" or "both A and B," and specifically means "A," "B," or "A and B."

In the present specification, "n-" means "normal," "i-" or "iso-" means "iso," and "tert-" or "t-" means "tertiary."

In the present specification, the term "(meth)acrylic" encompasses both acrylic and methacrylic, and "(meth) acrylate" refers to both acrylate and methacrylate.

In the present specification, the term "(meth)acryloyl group" encompasses both an acryloyl group and a methacryloyl group, and the term "(meth)acryloyloxy group" encompasses both an acryloyloxy group and a methacryloyloxy group.

In the present specification, the "acryloyl group" is represented by "$CH_2$=CHC(=O)-," the "methacryloyl group" is represented by "$CH_2$=C($CH_3$)C(=O)-," the "acryloyloxy group" is represented by "$CH_2$=CHC(=O)O-," and the "methacryloyloxy group" is represented by "$CH_2$=C($CH_3$)C(=O)O-."

In the present specification, examples of linear or branched alkyl groups having 1 to 20 (1, 2, 3, 4, 5, 6, 7, 8, 9, 10, 11, 12, 13, 14, 15, 16, 17, 18, 19, or 20) carbon atoms include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a cyclopentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-icosyl group, and the like.

In the present specification, examples of linear or branched alkylene groups having 1 to 10 (1, 2, 3, 4, 5, 6, 7, 8, 9, or 10) carbon atoms include a methylene group, an ethylene group, an n-propylene group, an isopropylene group, an n-butylene group, an isobutylene group, a sec-butylene group, a tert-butylene group, an n-pentylene group, an isopentylene group, a neopentylene group, a cyclopentylene group, an n-hexylene group, an n-heptylene group, an n-octylene group, an n-nonylene group, an n-decylene group, and the like.

Modified Polyolefin Resin Composition

The modified polyolefin resin composition in the present embodiment comprises, as essential components, an acid-modified polyolefin resin (A) and a compound having a polymerizable unsaturated group (B). The compound having a polymerizable unsaturated group (B) comprises a compound having a polymerizable unsaturated group with an elongation at break of 30% or more (B-1) as an essential component.

The modified polyolefin resin composition in the present embodiment generally has sufficient fluidity within the

range of 25°C or higher and 80°C or lower. In the present specification, resin compositions with fluidity refer to, for example, uniform liquid compositions that do not contain coarse resin particles, aggregates, etc.

The modified polyolefin resin composition in the present embodiment is generally a resin composition that flows when placed in a glass bottle and tilted within the range of 25°C or higher and 80°C or lower. In the present embodiment, resin compositions with fluidity generally also include resin compositions that flow upon receiving mechanical shear within the range of 25°C or higher and 80°C or lower.

Acid-modified Polyolefin Resin (A)

The present invention comprises an acid-modified polyolefin resin (A). The acid-modified polyolefin resin (A) is a polymer obtained by graft-polymerization of an α,β-unsaturated carboxylic and/or an acid anhydride thereof onto a polyolefin resin. In other words, the acid-modified polyolefin resin (A) is a graft polymer having a structure with an α,β-unsaturated carboxylic and/or an acid anhydride thereof grafted to a polyolefin resin.

The polyolefin resin generally has an α-olefin-derived structural unit. Examples of α-olefins include α-olefins having 2 to 20 (2, 3, 4, 5, 6, 7, 8, 9, 10, 11, 12, 13, 14, 15, 16, 17, 18, 19, or 20) carbon atoms, such as ethylene, propylene, 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene.

The polyolefin resin may be an olefin polymer including a single α-olefin-derived structural unit or a copolymer of olefin polymers including two or more α-olefin-derived structural units.

In one embodiment, the polyolefin resin is generally a petroleum-derived polyolefin resin. Petroleum-derived polyolefin resins are polyolefin resins synthesized from petroleum-derived olefins.

Petroleum-derived olefins are olefins produced by thermal cracking of petrochemical feedstocks such as naphtha, ethane, liquefied petroleum gas (LPG), natural gas liquid (NGL), and gas oil.

In one embodiment, examples of polyolefin resins that constitute the acid-modified polyolefin resin (A) include homopolypropylene (a propylene homopolymer), a propylene-α-olefin copolymer, homopolyethylene (an ethylene homopolymer), an ethylene-α-olefin copolymer, homopoly-1-butene, a 1-butene-α-olefin copolymer, and the like. These polyolefin resins can be used alone or in a combination of two or more. Of these polyolefin resins, homopolypropylene and/or a propylene-α-olefin copolymer are preferred, and a propylene-α-olefin copolymer is more preferred.

In one embodiment, the acid-modified polyolefin resin (A) is preferably a graft polymer having a structure with an α,β-unsaturated carboxylic and/or an acid anhydride thereof grafted to homopolypropylene or a propylene-α-olefin copolymer, and more preferably a graft polymer having a structure with an α,β-unsaturated carboxylic and/or an acid anhydride thereof grafted to a propylene-α-olefin copolymer.

The propylene-α-olefin copolymer refers to a copolymer of propylene and an α-olefin. Examples of α-olefins include ethylene and α-olefins having 4 to 20 (4, 5, 6, 7, 8, 9, 10, 11, 12, 13, 14, 15, 16, 17, 18, 19, or 20) carbon atoms, such as 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the propylene component in the propylene-α-olefin copolymer is preferably 50 mol% or more, more preferably 55 mol% or more, even more preferably 60 mol% or more, still more preferably 65 mol% or more, and particularly preferably 70 mol% or more. When the content of the propylene component in the propylene-α-olefin copolymer is 50 mol% or more, the water resistance of the modified polyolefin resin composition in the present embodiment and the adhesion of the modified polyolefin resin composition to polyolefin substrates (in particular, polypropylene substrates) are further improved.

The ethylene-α-olefin copolymer refers to a copolymer of ethylene and an α-olefin. Examples of α-olefins include α-olefins having 3 to 20 (3, 4, 5, 6, 7, 8, 9, 10, 11, 12, 13, 14, 15, 16, 17, 18, 19, or 20) carbon atoms, such as propylene, 1-butene, isobutene, 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the ethylene component in the ethylene-α-olefin copolymer is preferably 75 mol% or more. When the content of the ethylene component in the ethylene-α-olefin copolymer is 75 mol% or more, the water resistance of the modified polyolefin resin composition in the present embodiment and the adhesion of the modified polyolefin resin composition to polyolefin substrates (in particular, polyethylene substrates) are further improved.

The 1-butene-α-olefin copolymer refers to a copolymer of 1-butene and an α-olefin. Examples of α-olefins include ethylene, propylene, and α-olefins having 5 to 20 (5, 6, 7, 8, 9, 10, 11, 12, 13, 14, 15, 16, 17, 18, 19, or 20) carbon atoms, such as 1-pentene, 4-methyl-1-pentene, 1-hexene, 1-heptene, 1-octene, 1-decene, 1-dodecene, 1-tetradecene, 1-hexadecene, 1-octadecene, and 1-eicosene. These α-olefins can be used alone or in a combination of two or more.

The content of the 1-butene component in the 1-butene-α-olefin copolymer is preferably 65 mol% or more. When the content of the 1-butene component in the 1-butene-α-olefin copolymer is 65 mol% or more, the water resistance of the

modified polyolefin resin composition in the present embodiment and the adhesion of the modified polyolefin resin composition to polyolefin substrates (particularly polypropylene substrates or poly-1-butene substrates) are further improved.

In one embodiment, the polyolefin resin can be a biobased polyolefin resin instead of a petroleum-derived polyolefin resin. The term "biobased polyolefin resin" refers to a polyolefin resin produced from biological resources (biomass). The term "biomass" refers to materials made from renewable biological organic resources, excluding fossil resources.

When using a biobased polyolefin resin, preferably, the polyolefin resin has a propylene structural unit. When using a biobased polyolefin resin, the biobased content of the polyolefin resin is generally 25% or more, preferably 27% or more, and more preferably 30% or more. The upper limit of the biobased content is not particularly limited as long as it is 100% or less. The biobased content of the polyolefin resin can be calculated from the carbon-14 isotope content measured in accordance with ASTM D 6866, for example.

Examples of the α,β-unsaturated carboxylic acid and/or the acid anhydride thereof to be graft-polymerized onto a polyolefin resin that constitutes the acid-modified polyolefin resin (A) include maleic acid, maleic anhydride, fumaric acid, citraconic acid, citraconic anhydride, mesaconic acid, itaconic acid, itaconic anhydride, aconitic acid, aconitic anhydride, himic anhydride, and the like. Preferred among these α,β-unsaturated carboxylic acids or acid anhydrides thereof are maleic acid, maleic anhydride, and itaconic anhydride; and more preferred are maleic acid and maleic anhydride.

The acid value of each of the α,β-unsaturated carboxylic acid and the anhydride component thereof in the acid-modified polyolefin resin (A) is preferably 1 to 100 mgKOH/g, more preferably 5 to 50 mgKOH/g, even more preferably 10 to 40 mgKOH/g, and still more preferably 15 to 30. When the acid value of each of the α,β-unsaturated carboxylic acid and the anhydride component thereof in the acid-modified polyolefin resin (A) is within the range of 1 to 100 mgKOH/g, the fluidity of the modified polyolefin resin composition in the present embodiment is further improved.

The acid value of each of the α,β-unsaturated carboxylic acid and the anhydride component thereof in the acid-modified polyolefin resin (A) can be determined using a Fourier transform infrared spectrophotometer (FT-IR) and the following formula (i) using the coefficient (f) derived from a calibration curve prepared with a chloroform solution of maleic anhydride and the absorbance (I) of the stretching peak (1780 $cm^{-1}$) of the carbonyl (C=O) bonds in succinic anhydride in an acid-modified polyolefin solution.

Acid value (mgKOH/g) = absorbance (I) × coefficient (f) × 2 × molecular weight of potassium hydroxide × 1000 (mg)/molecular weight of succinic anhydride     Formula (1)

In formula (i), the molecular weight of succinic anhydride is 100.07, and the molecular weight of potassium hydroxide is 56.11.

Known methods can be widely used to graft-polymerize an α,β-unsaturated carboxylic acid or an anhydride thereof onto a polyolefin resin. Examples of such methods include a method of heating and melting a polyolefin at a temperature equal to or higher than its melting point in the presence of a radical generator to allow reaction with an α,β-unsaturated carboxylic acid or an anhydride thereof (melting method), and a method of heating and stirring a polyolefin that has been dissolved in an organic solvent in the presence of a radical generator to allow reaction with an α,β-unsaturated carboxylic acid or an anhydride thereof (solution method).

In one embodiment, the acid-modified polyolefin resin (A) may be further chlorinated, i.e., an acid-modified chlorinated polyolefin resin. As the method of chlorination, for example, chlorine gas is blown into an acid-modified polyolefin resin to introduce chlorine atoms. More specifically, chlorination can be carried out by dispersing or dissolving an acid-modified polyolefin resin in a solvent as required, then blowing chlorine gas thereinto in the presence of a catalyst or under ultraviolet irradiation, under elevated or normal pressure (atmospheric pressure) in a temperature range of 50 to 150°C.

Examples of the solvent used in chlorination include water and chlorinated solvents (e.g., chloroform, methylene chloride, and carbon tetrachloride), with chlorinated solvents being preferred. The chlorinated solvent may be distilled off under reduced pressure at the end of chlorination, or may be replaced with another organic solvent.

Examples of the catalyst used in chlorination include radical initiators. Examples of radical initiators include tert-butyl peroxy-2-ethylhexanoate, tert-butyl peroxyoctoate, di-tert-butyl peroxide, dicumyl peroxide, and the like.

When the acid-modified polyolefin resin (A) is chlorinated, the chlorine content of the acid-modified chlorinated polyolefin resin is preferably 5 mass% or more, more preferably 8 mass% or more, even more preferably 10 mass% or more, particularly preferably 12 mass% or more, and most preferably 14 mass% or more. When the chlorine content of the acid-modified chlorinated polyolefin resin is 5 mass% or more, the stability of the resin in a solution is better, facilitating the emulsification of the acid-modified chlorinated polyolefin resin.

The chlorine content of the acid-modified chlorinated polyolefin resin is preferably 40 mass% or less, more preferably 38 mass% or less, even more preferably 35 mass% or less, particularly preferably 32 mass% or less, and most

preferably 30 mass% or less. When the chlorine content of the acid-modified chlorinated polyolefin resin is 40 mass% or less, the crystallinity of the acid-modified chlorinated polyolefin is increased, further improving adhesion to polyolefin substrates.

When the acid-modified polyolefin resin (A) is chlorinated, the chlorine content of the acid-modified chlorinated polyolefin resin is preferably 5 mass% or more and 40 mass% or less, more preferably 8 mass% or more and 38 mass% or less, even more preferably 10 mass% or more and 35 mass% or less, still more preferably 12 mass% or more and 32 mass% or less, and particularly preferably 14 mass% or more and 30 mass% or less. When the chlorine content in the acid-modified chlorinated polyolefin resin is 5 mass% or more and 40 mass% or less, (I) the stability in the solution becomes more favorable, and the acid-modified chlorinated polyolefin resin becomes easier to emulsify, and (II) the crystallinity of the acid-modified chlorinated polyolefin increases, leading to further improved adhesion to polyolefin substrates.

The chlorine content of the acid-modified chlorinated polyolefin resin can be measured in accordance with JIS K-7229-1995. Specifically, the chlorine content can be measured using the "oxygen flask combustion method," in which the acid-modified chlorinated polyolefin resin is burned in an oxygen atmosphere, the generated chlorine gas is absorbed with water, and the chlorine content is determined by titration.

The melting point of the acid-modified polyolefin resin (A) is preferably 90°C or lower, more preferably 85°C or lower, and particularly preferably 80°C or lower. When the melting point of the acid-modified polyolefin resin (A) is 90°C or lower, adhesion to polyolefin substrates is further improved.

The melting point of the acid-modified polyolefin resin (A) is preferably 50°C or higher, more preferably 55°C or higher, and particularly preferably 60°C or higher. When the melting point of the acid-modified polyolefin resin (A) is 50°C or higher, adhesion to polyolefin substrates is further improved.

The melting point of the acid-modified polyolefin resin (A) can be measured with a differential scanning calorimeter (DSC) in accordance with JIS K 7121-2012. Specifically, with a DSC meter, about 5 mg of a sample is maintained in a heated and melted state at 150°C for 10 minutes and then cooled at a rate of 10°C/minute until the sample is stabilized and maintained at -50°C. Thereafter, the sample is further heated to 150°C at a rate of 10°C/minute, and the peak melting temperature at which the sample is melted is measured and evaluated as the melting point.

The weight average molecular weight (Mw) of the acid-modified polyolefin resin (A) is preferably 3000 to 200000, more preferably 10000 to 150000, even more preferably 20000 to 120000, still more preferably 30000 to 100000, and particularly preferably 40000 to 90000. When the weight average molecular weight (Mw) of the acid-modified polyolefin resin (A) is within the range of 3000 to 200000, good fluidity is ensured. In addition, when the weight average molecular weight (Mw) is within the range of 3000 to 200000, the cohesive force of the acid-modified polyolefin resin (A) is further improved, and adhesion is further improved. The weight average molecular weight (Mw) of the acid-modified polyolefin resin (A) can be measured by gel permeation chromatography (GPC). The specific measurement method will be explained in the Examples described below.

The acid-modified polyolefin resin (A) may be further copolymerized with a radically polymerizable monomer as long as the effects of the present invention are not impaired. The content of the radically polymerizable monomer is generally 40 parts by mass or less, preferably 20 parts by mass or less, more preferably 5 parts by mass or less, and even more preferably 1 part by mass or less, per 100 parts by mass of the acid-modified polyolefin resin (A).

The form in which the acid-modified polyolefin resin (A) is copolymerized with a radically polymerizable monomer is not limited. Examples of the form of copolymerization include random copolymerization, block copolymerization, graft copolymerization (graft modification), and the like.

Examples of radically polymerizable monomers include (meth)acrylic compounds, vinyl compounds, and the like. (Meth)acrylic compounds refer to compounds containing at least one (meth)acryloyl group (an acryloyl group and/or a methacryloyl group) in the molecule.

Examples of radically polymerizable monomers include (meth)acrylic acid, methyl (meth)acrylate, ethyl (meth) acrylate, n-butyl (meth)acrylate, cyclohexyl (meth)acrylate, hydroxyethyl (meth)acrylate, isobornyl (meth)acrylate, glycidyl (meth)acrylate, octyl (meth)acrylate, lauryl (meth)acrylate, tridecyl (meth)acrylate, stearyl (meth)acrylate, 4-tert-butylcyclohexyl (meth)acrylate, benzyl (meth)acrylate, phenyl (meth)acrylate, dimethylaminoethyl (meth)acrylate, diethylaminoethyl (meth)acrylate, hydroxyethyl (meth)acrylate, 2-hydroxyethyl (meth)acrylate, N,N-dimethylaminoethyl (meth) acrylate, acetoacetoxyethyl (meth)acrylate, N-methyl(meth)acrylamide, N-ethyl(meth)acrylamide, N-propyl(meth)acrylamide, N-isopropyl(meth)acrylamide, N-butyl(meth)acrylamide, N-isobutyl(meth)acrylamide, N-t-butyl(meth)acrylamide, N,N-dimethyl(meth)acrylamide, N,N-dimethylaminopropyl(meth)acrylamide, N,N-methylene-bis(meth)acrylamide, N-methylol(meth)acrylamide, hydroxyethyl(meth)acrylamide, (meth)acryloylmorpholine, n-butyl vinyl ether, 4-hydroxybutyl vinyl ether, dodecyl vinyl ether, and the like. Preferred among these are methyl (meth)acrylate, ethyl (meth)acrylate, cyclohexyl (meth)acrylate, and lauryl (meth)acrylate; and more preferred are these methacrylates, i.e., methyl methacrylate, ethyl methacrylate, cyclohexyl methacrylate, and lauryl methacrylate. These radically polymerizable monomers can be used alone or in a combination of two or more.

In one embodiment, the content of the acid-modified polyolefin resin (A) is preferably 10 to 50 parts by mass, more preferably 12 to 45 parts by mass, even more preferably 15 to 40 parts by mass, and still more preferably 18 to 35 parts by

mass, per 100 parts by mass of the compound having a polymerizable unsaturated group (B) from the viewpoint of further maintaining fluidity of the modified polyolefin resin composition even more favorably, as well as further improving water resistance and adhesion to polyolefin substrates.

In one embodiment, from the viewpoint of maintaining fluidity of the modified polyolefin resin composition even more favorably and further improving water resistance and its adhesion to polyolefin substrates, the content ratio of the acid-modified polyolefin resin (A) to the total mass of the modified polyolefin resin composition is preferably 5 to 50 mass%, more preferably 7 to 45 mass%, even more preferably 10 to 40 mass%, and still more preferably 15 to 35 mass%.

Compound Having Polymerizable Unsaturated Group (B)

The present invention comprises a compound having a polymerizable unsaturated group (B) as an essential component. The compound having a polymerizable unsaturated group (B) has one or more polymerizable unsaturated groups. In the present invention, the term "polymerizable unsaturated group" refers to an unsaturated group capable of radical polymerization.

In one embodiment, the number of polymerizable unsaturated groups in the compound having a polymerizable unsaturated group (B) is typically 1, 2, 3, or 4, preferably 1, 2, or 3, and more preferably 1 or 2.

In one embodiment, the polymerizable unsaturated group in the compound having a polymerizable unsaturated group (B) is preferably at least one selected from the group consisting of an acryloyl group, a methacryloyl group, an acryloyloxy group, a methacryloyloxy group, a vinyl group, an allyl group, a propenyl group, an isopropenyl group, a maleimide group, and a vinyl ether group.

In one embodiment, the polymerizable unsaturated group in the compound having a polymerizable unsaturated group (B) is more preferably at least one selected from the group consisting of an acryloyl group, a methacryloyl group, an acryloyloxy group, and a methacryloyloxy group.

In one embodiment, the polymerizable unsaturated group in the compound having a polymerizable unsaturated group (B) is more preferably an acryloyloxy group and/or a methacryloyloxy group.

Compound Having Polymerizable Unsaturated Group with Elongation at Break of 30% or More (B-1)

The compound having a polymerizable unsaturated group (B) comprises a compound having a polymerizable unsaturated group with an elongation at break of 30% or more (B-1). The modified polyolefin resin composition exhibits excellent bending resistance due to the inclusion of a compound having a polymerizable unsaturated group with an elongation at break of 30% or more (B-1) in the modified polyolefin resin composition.

In one embodiment, the elongation at break of the compound having a polymerizable unsaturated group (B-1) is preferably 100% or more, more preferably 300% or more, and even more preferably 500% or more. In the present disclosure, the upper limit of the elongation at break of the compound having a polymerizable unsaturated group (B-1) is typically 2000% or less from the viewpoint of further improving the workability of film formation. The elongation at break of the compound having a polymerizable unsaturated group (B-1) can be measured according to the method described below in section "Measurement Method for Elongation at Break of Compound Having polymerizable Unsaturated Group (B)."

In one embodiment, from the viewpoint of further improving the binding resistance of the modified polyolefin resin composition, the compound having a polymerizable unsaturated group with an elongation at break of 30% or more (B-1) is preferably at least one compound selected from the group consisting of urethane (meth)acrylate, epoxy (meth)acrylate, polyester (meth)acrylate, polyether (meth)acrylate, and vinyl ester.

In one embodiment, from the viewpoint of further improving the bending resistance of the modified polyolefin resin composition, the compound having a polymerizable unsaturated group with an elongation at break of 30% or more (B-1) is more preferably at least one compound selected from the group consisting of urethane (meth)acrylate, polyester (meth)acrylate, and vinyl ester.

In one embodiment, from the viewpoint of further improving the bending resistance of the modified polyolefin resin composition, the compound having a polymerizable unsaturated group with an elongation at break of 30% or more (B-1) is even more preferably urethane (meth)acrylate and/or vinyl ester.

Urethane (Meth)acrylate

Urethane (meth)acrylate typically has an elongation at break of 30% or more. Urethane (meth)acrylate is typically a compound that has an urethane bond within its molecule and also a (meth)acrylate group in its molecule.

In one embodiment, examples of urethane (meth)acrylate include:

i) a compound obtained by reacting a compound having two or more isocyanate groups in the molecule with a

compound having one or more hydroxyl groups and one or more double-bond groups in the molecule in an equimolar ratio;

ii) a compound obtained by reacting a compound having two or more isocyanate groups in the molecule with a condensate of a polyol and a monobasic acid and/or a polybasic acid and/or an acid anhydride thereof, and then further reacting the resultant with a compound having one or more hydroxyl groups and one or more double-bond groups in the molecule; and

iii) a compound obtained by reacting a polyol with a compound having two or more isocyanate groups within the molecule, and then further reacting the resultant with a compound having one or more hydroxyl groups and one or more double-bond groups within the molecule.

In items i) to iii) above, examples of compounds having one or more hydroxyl groups and one or more double-bond groups in the molecule include 2-hydroxy (meth)acrylate, 2-hydroxypropyl (meth)acrylate, 4-hydroxybutyl (meth) acrylate, pentaerythritol triacrylate, and dipentaerythritol pentaacrylate. Moreover, in items ii) and iii) above, the polyol for use may be a known polyol commonly used in the art, such as acrylic polyols, polyester polyols, and polycarbonate polyols. Specific examples of polyols include various low-molecular-weight diols, such as ethylene glycol, butanediol, glycerin, pentaerythritol, neopentyl glycol, polyethylene glycol, polycarbonate diol, polytetramethylene glycol, and trimethylolpropane.

In items i) to iii) above, examples of compounds having two or more isocyanate groups in the molecule include aromatic compounds, such as tolylene diisocyanate, 4,4'-diphenylmethane diisocyanate, xylylene diisocyanate, and metaxylylene diisocyanate; aliphatic compounds, such as hexamethylene diisocyanate; alicyclic compounds, such as isophorone diisocyanate; and multimers, such as the biuret type, nurate type, and adduct type of these aromatic compounds, aliphatic compounds, or alicyclic compounds.

The polyurethane acrylate may partially contain urea bonds. To incorporate urea bonds, a polyamine compound can be partially used in the synthesis of polyurethane acrylate. Examples of usable polyamine compounds include aliphatic polyamines, such as ethylenediamine, trimethylenediamine, tetramethylenediamine, pentamethylenediamine, hexamethylenediamine, triethylenetetramine, diethylenetriamine, triaminopropane, 2,2,4-trimethylhexamethylenediamine, 2-hydroxyethylethylenediamine, N-(2-hydroxyethyl)propylenediamine, (2-hydroxyethylpropylene)diamine, (di-2-hydroxyethylethylene)diamine, (di-2-hydroxyethylpropylene)diamine, (2-hydroxypropylethylene)diamine, (di-2-hydroxypropylethylene)diamine, and piperazine; alicyclic polyamines, such as 1,2- and 1,3-cyclobutanediamine, 1,2-, 1,3- and 1,4-cyclohexanediamine, isophorone diamine (IPDA), methylene bis(cyclohexane-2,4'- and/or 4,4'-diamine), and norbornanediamine; aromatic diamines, such as phenylenediamine, xylylenediamine, 2,4-tolylenediamine, 2,6-tolylenediamine, diethyltoluenediamine, 3,3'-dichloro-4,4'-diaminodiphenylmethane, and 4,4'-bis(sec-butyl)diphenylmethane; and dimer diamines obtained by converting the carboxyl groups of dimer acid to amino groups, and dendrimers having a primary or secondary amino group at the terminals.

In one embodiment, the number of polymerizable unsaturated groups per molecule in the urethane (meth) acrylate is preferably 1 to 20, and more preferably 1 to 10.

Polyester (Meth)acrylate

Polyester (meth)acrylates typically have an elongation at break of 30% or more. Polyester (meth)acrylate can be obtained, for example, by reacting a polyester polycarboxylic acid, which is obtained through polycondensation of a polybasic acid and a polyhydric alcohol, with hydroxyl group-containing (meth)acrylate or the like.

Examples of polybasic acids include aliphatic polybasic acids, alicyclic polybasic acids, and aromatic polybasic acids. Examples of such aliphatic polybasic acids include aliphatic dicarboxylic acids, such as oxalic acid, malonic acid, succinic acid, adipic acid, sebacic acid, azelaic acid, suberic acid, maleic acid, fumaric acid, dodecanedioic acid, pimelic acid, citraconic acid, glutaric acid, itaconic acid, succinic anhydride, and maleic anhydride. Furthermore, anhydrides of the aliphatic dicarboxylic acids and derivatives of the acid anhydrides of the aliphatic dicarboxylic acids can also be used.

Examples of polyhydric alcohols include aliphatic diol compounds, alicyclic diol compounds, and the like. Specific examples of polyhydric alcohols include ethylene glycol, propylene glycol, dipropylene glycol, diethylene glycol, triethylene glycol, butylene glycol, 3-methyl-1,5-pentanediol, 2,4-diethyl-1,5-pentanediol, 2-methyl-1,8-octanediol, 3,3'-dimethylolheptane, 2-butyl-2-ethyl-1,3-propanediol, polyoxyethylene glycol (number of moles added: 10 or less), polyoxypropylene glycol (number of moles added: 10 or less), propanediol, 1,3-butanediol, 1,4-butanediol, 1,5-pentanediol, 1,6-hexanediol, 1,9-nonanediol, neopentyl glycol, octanediol, butylethylpentanediol, 2-ethyl-1,3-hexanediol, cyclohexanediol, cyclohexanedimethanol, tricyclodecanedimethanol, cyclopentadienedimethanol, dimer diol, and the like. Moreover, as the polyhydric alcohol, polyols containing three or more hydroxyl groups, such as glycerin, trimethylolpropane, pentaerythritol, and dipentaerythritol, may partially be used.

Examples of hydroxyl group-containing (meth)acrylates include 2-hydroxy(meth)acrylate, 2-hydroxypropyl (meth)acrylate, 4-hydroxybutyl (meth)acrylate, pentaerythritol triacrylate, and dipentaerythritol pentaacrylate.

The number of polymerizable unsaturated groups per molecule in the polyester (meth)acrylate is preferably 1 to 20, and more preferably 1 to 10.

Vinyl Ester

Vinyl esters typically have an elongation at break of 30% or more. The vinyl ester is preferably represented by the following formula (3), and more preferably is a vinyl ester of versatic acid.

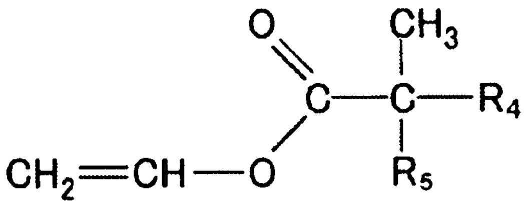

(3)

In formula (3), $R_4$ and $R_5$ are each an alkyl group, and at least either $R_4$ or $R_5$ or both are an alkyl group with a branched structure. It is also preferred that the total number of carbon atoms in $R_4$ and $R_5$ is 4 or more and 7 or less, and more preferably 4 or more and 6 or less. Examples of alkyl groups represented by $R_4$ and $R_5$ include a methyl group, an ethyl group, an n-propyl group, an isopropyl group, an n-butyl group, a tert-butyl group, a sec-butyl group, an isobutyl group, an n-pentyl group, an isopentyl group, a sec-pentyl group, a tert-pentyl group, an n-hexyl group, a 1,1-dimethylbutyl group, a 2-methylpentyl group, a 3-methylpentyl group, a 4-methylpentyl group, a 1-ethylbutyl group, a 2-ethylbutyl group, a 3-ethylbutyl group, and a 1-methyl-1-ethylpropyl group. Examples of alkyl groups with a branched structure include an isopropyl group (a 1-methylethyl group), a tert-butyl group (a 1,1-dimethylethyl group), a sec-butyl group (a 1-methylpropyl group), an isobutyl group (a 2-methylpropyl group), a tert-pentyl group (a 1,1-dimethylpropyl group), an isopentyl group (a 3-methylbutyl group), a sec-pentyl group (a 1-methylbutyl group), a 1,1-dimethylbutyl group, a 2-methylpentyl group, a 3-methylpentyl group, a 4-methylpentyl group, a 1-ethylbutyl group, a 2-ethylbutyl group, a 3-ethylbutyl group, a 1-methyl-1-ethylpropyl group, and the like.

The vinyl ester of versatic acid is preferably a compound represented by formula (3) with a total carbon number of 9 to 11.

Measurement Method for Elongation at Break of Compound Having Polymerizable Unsaturated Group (B)

The elongation at break of the compound having a polymerizable unsaturated group (B) can be measured according to the following method:

A compound having a polymerizable unsaturated group (B) is mixed with 1-hydroxycyclohexyl phenyl ketone in a ratio by mass of 100/3 (a compound having a polymerizable unsaturated group (B)/1-hydroxycyclohexyl phenyl ketone). Ultraviolet irradiation is performed using a high-pressure mercury lamp under the conditions of a cumulative light exposure of 800 $mJ/cm^2$ to obtain a cured coating film with a thickness of 100 $\mu m$. The elongation at break of the cured coating film is measured using a tensile tester (Tensilon RTM-100, manufactured by Orientec Corporation) until the film is fractured under the following conditions: a width of 10 mm, a grip-to-grip distance of 30 mm, a tensile speed of 100 mm/min, an atmosphere at a temperature of 20°C, and a relative humidity of 65%. The elongation at break of the compound having a polymerizable unsaturated group (B) is then calculated using the following equation (9).

Elongation at break (%) of a compound having a polymerizable unsaturated group (B) = 100 × {(length at break) - (initial length before tensile test)}/initial length before tensile test     Equation (9)

Compound Having Polymerizable Unsaturated Group with Elongation at Break of Less Than 30% (B-2)

In one embodiment, from the viewpoint of maintaining the fluidity of the modified polyolefin resin composition more favorably, it is preferred that the compound having a polymerizable unsaturated group (B) further comprises a compound having a polymerizable unsaturated group with an elongation at break of less than 30% (B-2).

From the viewpoint of maintaining the fluidity of the modified polyolefin resin composition even more favorably, the elongation at break of the compound having a polymerizable unsaturated group (B-2) is preferably 20% or less, and more preferably 10% or less. The elongation at break of the compound having a polymerizable unsaturated group (B-2) can be measured according to the method described in section "Measurement Method for Elongation at Break of Compound Having Polymerizable Unsaturated Group (B)."

In one embodiment, the compound having a polymerizable unsaturated group with an elongation at break of less

than 30% (B-2) preferably comprises a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms, and one or more (typically 1, 2, 3, or 4, preferably 1, 2, or 3, more preferably 1 or 2) polymerizable unsaturated groups (B-21). In the present embodiment, the linear or branched alkyl group having 1 to 20 (1, 2, 3, 4, 5, 6, 7, 8, 9, 10, 11, 12, 13, 14, 15, 16, 17, 18, 19, or 20) carbon atoms may have an alicyclic structure (preferably cyclohexyl) or an aromatic ring structure (preferably phenyl or naphthyl, more preferably phenyl). In the present embodiment, the number of carbon atoms in the linear or branched alkyl group is preferably 1 to 10 (1, 2, 3, 4, 5, 6, 7, 8, 9, or 10).

From the viewpoint of maintaining the fluidity of the modified polyolefin resin composition even more favorably, and further improving its adhesion to polyolefin substrates, the content ratio of the compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms, and one or more (typically 1, 2, 3, or 4, preferably 1, 2, or 3, more preferably 1 or 2) polymerizable unsaturated groups (B-21) to the total mass of the modified polyolefin resin composition is preferably 1 to 80 mass%, more preferably 2 to 75 mass%, even more preferably 3 to 70 mass%, still more preferably 10 to 65 mass%, and still more preferably 15 to 60 mass%.

In one embodiment, the alkyleneoxy group generally has a structure represented by the following formula (4):

$$-(Y^1\text{-}O)m- \qquad (4)$$

wherein $Y^1$ represents a linear or branched alkylene group having 1 to 10 (1, 2, 3, 4, 5, 6, 7, 8, 9, or 10) carbon atoms, and m represents an integer from 1 to 20.

In formula (4), $Y^1$ is preferably a linear or branched alkylene group having 1 to 5 (1, 2, 3, 4, or 5) carbon atoms.

In formula (4), m is preferably an integer from 2 to 15.

In one embodiment, the compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms, and one or more (typically 1, 2, 3, or 4, preferably 1, 2, or 3, more preferably 1 or 2) polymerizable unsaturated groups (B-21) preferably further comprises a compound represented by the following formula (4A):

$$R^a\text{-}R^b\text{-}R^c \qquad (4A)$$

wherein

$R^a$ represents a polymerizable unsaturated group, and $R^c$ represents a polymerizable unsaturated group or a linear or branched alkyl group having 1 to 10 (1, 2, 3, 4, 5, 6, 7, 8, 9, or 10) carbon atoms, or a hydroxyl group, with the proviso that the linear or branched alkyl group having 1 to 10 (1, 2, 3, 4, 5, 6, 7, 8, 9, or 10) carbon atoms may have an alicyclic structure (preferably cyclohexyl) or an aromatic ring structure (preferably phenyl or naphthyl, more preferably phenyl),
$R^b$ represents a group represented by $-(Y^2\text{-}O)n-$,
$Y^2$ represents a linear or branched alkylene group having 1 to 10 (1, 2, 3, 4, 5, 6, 7, 8, 9, or 10) carbon atoms,
n represents an integer from 1 to 20; and/or
a compound represented by the following formula (4B):

$$R^a\text{-}R^d \qquad (4B)$$

$R^a$ represents a polymerizable unsaturated group, and $R^d$ represents an optionally substituted, linear or branched alkyl group having 1 to 20 (1, 2, 3, 4, 5, 6, 7, 8, 9, 10, 11, 12, 13, 14, 15, 16, 17, 18, 19, or 20) carbon atoms, with the proviso that the substituent represents a hydroxyl group, a polymerizable unsaturated group, or an alkoxy group, and the linear or branched alkyl group having 1 to 20 (1, 2, 3, 4, 5, 6, 7, 8, 9, 10, 11, 12, 13, 14, 15, 16, 17, 18, 19, or 20) carbon atoms may have an alicyclic structure (preferably cyclohexyl) or an aromatic ring structure (preferably phenyl or naphthyl, more preferably phenyl).

In formula (4A), $Y^2$ is preferably a linear or branched alkylene group having 1 to 5 (1, 2, 3, 4, or 5) carbon atoms.

In formula (4A), n is preferably an integer from 2 to 15.

In one embodiment, more preferably, the compound having a polymerizable unsaturated group with an elongation at break of less than 30% (B-2) comprises the compound (B-21); and a compound represented by formula (4A) or a compound represented by formula (4B).

In one embodiment, preferably, the compound (B-21) comprises a compound having a (meth)acryloyloxy group as the polymerizable unsaturated group. Examples of the compound having a (meth)acryloyloxy group include a compound having one (meth)acryloyloxy group, a compound having two (meth)acryloyloxy groups, a compound having three or more (meth)acryloyloxy groups, and the like. These compounds can be used alone or in a combination of two or

more.

Examples of the compound having one (meth)acryloyloxy group include: alkyl (meth)acrylates, such as 2-hydroxyethyl (meth)acrylate, 2-hydroxypropyl (meth)acrylate, 3-hydroxypropyl (meth)acrylate, 4-hydroxybutyl (meth)acrylate, 1,4-cyclohexanedimethanol monoacrylate, polyethylene glycol mono(meth)acrylate, polypropylene glycol mono(meth)acrylate, polybutylene glycol mono(meth)acrylate, polyethylene glycol-polypropylene glycol mono(meth)acrylate, 2-hydroxy-3-phenoxypropyl (meth)acrylate, phenoxydiethylene glycol (meth)acrylate, methyl(meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, n-hexyl (meth)acrylate, n-octyl (meth)acrylate, 2-ethylhexyl (meth)acrylate, dodecyl (meth)acrylate, stearyl (meth)acrylate, and behenyl (meth)acrylate; (meth)acrylates having an alicyclic structure, such as cyclohexyl (meth)acrylate, 4-tert-butylcyclohexyl acrylate, and isobornyl (meth)acrylate; (meth)acrylates having an aromatic ring, such as benzyl (meth)acrylate, phenoxyethyl acrylate, and phenoxyethyl methacrylate; and (meth)acrylates having an ether group, such as methoxymethyl (meth)acrylate, ethoxymethyl (meth)acrylate, propoxymethyl (meth)acrylate, 2-methoxyethyl (meth)acrylate, 1-methoxyethyl (meth)acrylate, 2-ethoxyethyl (meth)acrylate, 1-ethoxyethyl (meth)acrylate, 2-propoxyethyl (meth)acrylate, and 2-isopropoxyethyl (meth)acrylate. These compounds can be used alone or in a combination of two or more.

Examples of the compound having two (meth)acryloyloxy groups include: alkanediol di(meth)acrylates, such as 1,4-butanediol di(meth)acrylate, neopentyl glycol di(meth)acrylate, 1,6-hexanediol di(meth)acrylate, 1,9-nonanediol di(meth)acrylate, and tricyclodecane dimethylol di(meth)acrylate; bisphenol-modified di(meth)acrylates, such as bisphenol A ethylene oxide-modified di(meth)acrylate and bisphenol F ethylene oxide-modified di(meth)acrylate; and ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, urethane di(meth)acrylate, epoxy di(meth)acrylate, glycerol di(meth)acrylate, and the like. These compounds can be used alone or in a combination of two or more.

Examples of the compound having three or more (meth)acryloyloxy groups include: dipentaerythritol hexa(meth)acrylate, pentaerythritol tetra(meth)acrylate, ditrimethylolpropane tetra(meth)acrylate, pentaerythritol tri(meth)acrylate, trimethylolpropane tri(meth)acrylate; ethylene oxide-modified (meth)acrylates, such as ethylene oxide-modified dipentaerythritol hexa(meth)acrylate and ethylene oxide-modified pentaerythritol tetra(meth)acrylate; isocyanuric modified tri(meth)acrylates, such as isocyanuric acid ethylene oxide-modified tri(meth)acrylate and ε-caprolactone-modified tris(acryloxyethyl)isocyanurate; and urethane methacrylates, such as pentaerythritol tri(meth)acrylate hexamethylene diisocyanate urethane prepolymer, pentaerythritol tri(meth)acrylate toluene diisocyanate urethane prepolymer, and dipentaerythritol penta(meth)acrylate hexamethylene diisocyanate urethane prepolymer. These compounds can be used alone or in a combination of two or more.

In one embodiment, from the viewpoint of stably dissolving and/or dispersing the acid-modified polyolefin resin (A) in the compound having a polymerizable unsaturated group (B) and suppressing agglomeration, the compound (B-21) is more preferably a compound having one or two (meth)acryloyloxy groups.

The compound having one (meth)acryloyloxy group is preferably at least one selected from the group consisting of 2-hydroxyethyl (meth)acrylate, 2-hydroxypropyl (meth)acrylate, 3-hydroxypropyl (meth)acrylate, 4-hydroxybutyl (meth)acrylate, 1,4-cyclohexanedimethanol monoacrylate, polyethylene glycol mono(meth)acrylate, polypropylene glycol mono(meth)acrylate, polybutylene glycol mono(meth)acrylate, polyethylene glycol-polypropylene glycol mono(meth)acrylate, 2-hydroxy-3-phenoxypropyl (meth)acrylate, phenoxydiethylene glycol (meth)acrylate, methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, n-hexyl (meth)acrylate, n-octyl (meth)acrylate, 2-ethylhexyl (meth)acrylate, dodecyl (meth)acrylate, stearyl (meth)acrylate, behenyl (meth)acrylate, cyclohexyl (meth)acrylate, 4-tert-butylcyclohexyl acrylate, and isobornyl (meth)acrylate.

Preferably, the compound having two (meth)acryloyloxy groups is at least one selected from the group consisting of neopentyl glycol di(meth)acrylate, 1,6-hexanediol di(meth)acrylate, 1,9-nonanediol di(meth)acrylate, tricyclodecane dimethylol di(meth)acrylate, dipropylene glycol di(meth)acrylate, tripropylene glycol di(meth)acrylate, tetrapropylene glycol di(meth)acrylate, and polypropylene glycol di(meth)acrylate.

In one embodiment, preferably, the compound having a polymerizable unsaturated group with an elongation at break of less than 30% (B-2) comprises a compound having a hydroxyl group and one or more (typically 1 to 4, preferably 1 to 3, more preferably 1 or 2, and even more preferably 2) polymerizable unsaturated groups (B-211), from the viewpoint of maintaining fluidity of the modified polyolefin resin composition even more favorably and further improving water resistance and adhesion to polyolefin substrates. In the present embodiment, the elongation at break of the compound (B-211) is typically less than 30%, preferably 20% or less, and more preferably 10% or less.

In one embodiment, it is more preferred that the compound having a polymerizable unsaturated group with an elongation at break of less than 30% (B-2) comprises a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms and having one or more (typically 1, 2, 3, or 4, preferably 1, 2, or 3, more preferably 1 or 2) polymerizable unsaturated groups (B-21), and a

compound having a hydroxyl group and one or more (typically 1, 2, 3, or 4, preferably 1, 2, or 3, more preferably 1 or 2, even more preferably 2) polymerizable unsaturated groups (B-211). In the present embodiment, the number of polymerizable unsaturated groups in the compound (B-21) is preferably 1 to 3, more preferably 1 or 2, and even more preferably 1. In the present embodiment, the linear or branched alkyl group having 1 to 20 (1, 2, 3, 4, 5, 6, 7, 8, 9, 10, 11, 12, 13, 14, 15, 16, 17, 18, 19, or 20) carbon atoms in the compound (B-21) may have an alicyclic structure (preferably cyclohexyl) or an aromatic ring structure (preferably phenyl or naphthyl, more preferably phenyl).

In one embodiment, from the viewpoint of maintaining the fluidity of the modified polyolefin resin composition even more favorably and further improving water resistance and its adhesion to polyolefin substrates, the number of hydroxyl groups in the compound having a hydroxyl group and one or more (typically 1 to 4, preferably 1 to 3, more preferably 1 or 2, even more preferably 2) polymerizable unsaturated groups (B-211) is preferably 1 or 2, and more preferably 1.

In one embodiment, the content ratio of the compound having a hydroxyl group and one or more (typically 1, 2, 3, or 4, preferably 1, 2, or 3, more preferably 1 or 2, even more preferably 2) polymerizable unsaturated groups (B-211) to the total mass of the modified polyolefin resin composition is preferably 1 to 50 mass%, more preferably 2 to 45 mass%, even more preferably 3 to 40 mass%, still more preferably 10 to 35 mass%, and still more preferably 15 to 30 mass%, from the viewpoint of maintaining the fluidity of the modified polyolefin resin composition even more favorably and further improving water resistance and adhesion to polyolefin substrates.

Specific examples of the compound having a hydroxyl group and one or more (typically 1, 2, 3, or 4, preferably 1, 2, or 3, more preferably 1 or 2, and even more preferably 2) polymerizable unsaturated groups (B-211) include 2-hydroxy-3-methacrylpropyl acrylate, 2-hydroxyethyl (meth)acrylate, 2-hydroxypropyl (meth)acrylate, 3-hydroxypropyl (meth)acrylate, 4-hydroxybutyl (meth)acrylate, 1,4-cyclohexanedimethanol monoacrylate, polyethylene glycol mono(meth)acrylate, polypropylene glycol mono(meth)acrylate, polybutylene glycol mono(meth)acrylate, polyethylene glycol-polypropylene glycol mono(meth)acrylate, 2-hydroxy-3-phenoxypropyl (meth)acrylate, 2-hydroxy-1,3-dimethacryloxypropane, glycerin diacrylate, pentaerythritol di(meth)acrylate, pentaerythritol tri(meth)acrylate, and the like.

In one embodiment, from the viewpoint of maintaining the fluidity of the modified polyolefin resin composition even more favorably and further suppressing agglomeration, while further improving water resistance and its adhesion to polyolefin substrates, it is preferred that the compound having a polymerizable unsaturated group with an elongation at break of less than 30% (B-2) comprises a compound containing a unit with a carbonyl group and one or more (typically 1, 2, 3, or 4, preferably 1, 2, or 3, more preferably 1 or 2, and even more preferably 1) polymerizable unsaturated groups (B-22).

From the viewpoint of maintaining the fluidity of the modified polyolefin resin composition even more favorably and further suppressing agglomeration, while improving water resistance and its adhesion to polyolefin substrates, the content ratio of the compound containing a unit with a carbonyl group and one or more (typically 1, 2, 3, or 4, preferably 1, 2, or 3, more preferably 1 or 2, and even more preferably 1) polymerizable unsaturated groups (B-22) to the total mass of the modified polyolefin resin composition is preferably 1 to 50 mass%, more preferably 2 to 48 mass%, even more preferably 3 to 45 mass%, still more preferably 10 to 42 mass%, and still more preferably 15 to 40 mass%.

In one embodiment, it is preferred that the unit with a carbonyl group in the compound containing a unit with a carbonyl group and one or more (typically 1, 2, 3, or 4, preferably 1, 2, or 3, more preferably 1 or 2, and even more preferably 1) polymerizable unsaturated groups (B-22) is a group represented by the following formula (1) or the following formula (2):

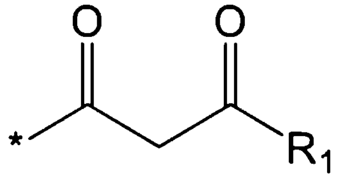

(1)

wherein

$R_1$ represents a hydrogen atom or a methyl group, and asterisk * represents a binding site; and

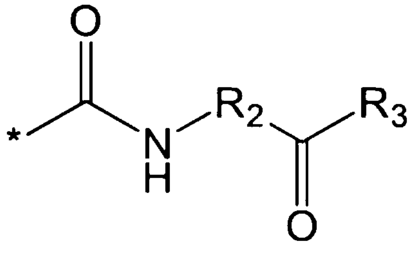

(2)

wherein

$R_2$ represents an optionally substituted hydrocarbon group having 1 to 10 (1, 2, 3, 4, 5, 6, 7, 8, 9, or 10) carbon atoms,
$R_3$ represents a hydrogen atom or an optionally substituted hydrocarbon group having 1 to 10 (1, 2, 3, 4, 5, 6, 7, 8, 9, or 10) carbon atoms,
asterisk * represents a binding site,
with the proviso that the optionally substituted hydrocarbon groups having 1 to 10 (1, 2, 3, 4, 5, 6, 7, 8, 9, or 10) carbon atoms represented by $R_2$ and $R_3$ may each independently further have a branched structure, an alicyclic structure (preferably cyclohexyl), or an aromatic ring structure (preferably phenyl, naphthyl, more preferably phenyl).

In formula (2), examples of substituents for $R_2$ include a halogen atom (a fluorine atom, a chlorine atom, a bromine atom, or an iodine atom), an alkoxy group, and the like.

In formula (2), examples of substituents for $R_3$ include an aldehyde group, an acetyl group, a halogen atom (a fluorine atom, a chlorine atom, a bromine atom, or an iodine atom), an alkoxy group, and the like.

In one embodiment, it is more preferred that the compound containing a unit with a carbonyl group and one or more (typically 1, 2, 3, or 4, preferably 1, 2, or 3, more preferably 1 or 2, and even more preferably 1) polymerizable unsaturated groups (B-22) comprises one or more kinds of the compound containing a unit with a carbonyl group represented by formula (1) or (2) and one or more (typically 1, 2, 3, or 4, preferably 1, 2, or 3, more preferably 1 or 2, and even more preferably 1) polymerizable unsaturated groups (B-221).

In one embodiment, it is even more preferred that the compound containing a unit with a carbonyl group and one or more (typically 1, 2, 3, or 4, preferably 1, 2, or 3, more preferably 1 or 2, and even more preferably 1) polymerizable unsaturated groups (B-22) is a compound containing a unit with a carbonyl group represented by formula (1) or (2) and one or more (typically 1, 2, 3, or 4, preferably 1, 2, or 3, more preferably 1 or 2, and even more preferably 1) polymerizable unsaturated groups (B-221).

In one embodiment, it is still more preferred that the compound containing a unit with a carbonyl group and one or more (typically 1, 2, 3, or 4, preferably 1, 2, or 3, more preferably 1 or 2, and even more preferably 1) polymerizable unsaturated groups (B-22) is a compound containing a unit with a carbonyl group represented by formula (1) and one or more (typically 1, 2, 3, or 4, preferably 1, 2, or 3, more preferably 1 or 2, and even more preferably 1) polymerizable unsaturated groups.

Examples of compounds containing a unit with a carbonyl group represented by formula (1) or (2) and one or more (typically 1, 2, 3, or 4, preferably 1, 2, or 3, more preferably 1 or 2, and even more preferably 1) polymerizable unsaturated groups (B-221) include acrylic acid acetoacetates, such as acetoacetoxy (meth)acrylate, acetoacetoxyethyl (meth)acrylate, acetoacetoxypropyl (meth)acrylate, allyl acetoacetate, acetoacetoxybutyl (meth)acrylate, and 2,3-di(acetoacetoxy)propyl (meth)acrylate; crotonic acid acetoacetates, such as 2-acetoacetoxyethyl crotonate and 2-acetoacetoxypropyl crotonate; acetoacetates, such as acetoacetoxy (meth)acrylamide, N-(acetoacetoxymethyl) (meth)acrylamide, N-(acetoacetoxyethyl) (meth)acrylamide, and other N-alkylol (meth)acrylamides; acetoacetylated products of ethylenically unsaturated monomers having a hydroxyl group, such as 2-hydroxyethyl methacrylate, hydroxypropyl acrylate, 2-hydroxy-3-chloropropyl methacrylate, 1,4-butylene glycol monoacrylate, 1,4-butylene glycol monomethacrylate, N-methylolacrylamide, N-methylolmethacrylamide, and hydroxystyrene; and diacetone (meth)acrylamide. Of these, diacetone acrylamide and acetoacetoxyethyl methacrylate are preferable for use from the viewpoint of maintaining the fluidity of the modified polyolefin resin composition even more favorably and further suppressing agglomeration, while improving water resistance and its adhesion to polyolefin substrates.

In one embodiment, the compound having a polymerizable unsaturated group (B) may contain a biomass-derived (meth)acrylic monomer component. The term "biomass-derived (meth)acrylic monomer component" refers to a component composed of biomass-derived (meth)acrylic acid or an ester of a biomass-derived alkanol with either biomass-derived or non-biomass-derived (meth)acrylic acid. Examples of biomass-derived alkanols include alkanols derived from plant-based materials such as biomass ethanol, palm oil, palm kernel oil, and coconut oil. In the case of a biomass-derived alkanol having three or more carbon atoms, the alkanol may be linear or branched.

In one embodiment, from the viewpoint of stably dissolving and/or dispersing the acid-modified polyolefin resin (A) in the compound having a polymerizable unsaturated group (B), the content ratio of the compound having a polymerizable unsaturated group (B) to the total mass of the modified polyolefin resin composition is preferably 10 to 90 mass%, more preferably 20 to 85 mass%, and even more preferably 30 to 80 mass%.

In one embodiment, when the compound having a polymerizable unsaturated group (B) comprises a compound having a polymerizable unsaturated group with an elongation at break of 30% or more (B-1) and a compound having a polymerizable unsaturated group with an elongation at break of less than 30% (B-2), the ratio by mass of the compound having a polymerizable unsaturated group with an elongation at break of 30% or more (B-1) to the compound having a polymerizable unsaturated group with an elongation at break of less than 30% (B-2) is the following: preferably (B-1):(B-2) = 99:1 to 5:95, more preferably (B-1):(B-2) = 80:20 to 20:80, even more preferably (B-1):(B-2) = 65:35 to 25:75, and still

more preferably (B-1):(B-2) = 40:60 to 60:40, from the viewpoint of maintaining the fluidity of the modified polyolefin resin composition even more favorably and further improving its adhesion to polyolefin substrates and bending resistance.

In one embodiment, the compound having a polymerizable unsaturated group with an elongation at break of less than 30% (B-2) is preferably at least one compound selected from the group consisting of a compound having an alkyleneoxy group and/or a linear or branched alkyl group having 1 to 20 carbon atoms (1, 2, 3, 4, 5, 6, 7, 8, 9, 10, 11, 12, 13, 14, 15, 16, 17, 18, 19, or 20), and one or more (typically 1, 2, 3, or 4, preferably 1, 2, or 3, more preferably 1 or 2) polymerizable unsaturated groups (B-21); a compound having a hydroxyl group and one or more (typically 1, 2, 3, or 4, preferably 1, 2, or 3, more preferably 1 or 2, and even more preferably 2) polymerizable unsaturated groups (B-211); and a compound containing a unit with a carbonyl group represented by formula (1) or formula (2), and one or more (typically 1, 2, 3, or 4, preferably 1, 2, or 3, more preferably 1 or 2, and even more preferably 1) polymerizable unsaturated groups (B-221).

Polyetheramine (C)

The modified polyolefin resin composition in the present embodiment preferably contains a polyetheramine (C). The polyetheramine (C) is typically a compound having a polyether chain and an amino group.

In one embodiment, it is preferred that the polyetheramine (C) has a polyether chain, and the polyether chain has a structure comprising at least one selected from the group consisting of:

a structure represented by formula 5: $-(O-CH_2CH_2)x-$, wherein x is an integer from 2 to 120,
a structure represented by formula 6-1: $-(O-CH_2CH(CH_3))y_1-$, wherein $y_1$ is an integer from 2 to 90,
a structure represented by formula 6-2: $-(O-CH_2CH_2CH_2)y_2-$, wherein $y_2$ is an integer from 2 to 90,
a structure represented by formula 7-1: $-(O-CH_2CH_2CH_2CH_2)z_1-$, wherein $z_1$ is an integer from 2 to 80,
a structure represented by formula 7-2: $-(O-CH(CH_3)\ CH_2CH_2)z_2-$, wherein $z_2$ is an integer from 2 to 80,
a structure represented by formula 7-3: $-(O-CH_2CH(CH_3)CH_2)z_3-$, wherein $z_3$ is an integer from 2 to 80, and
a structure represented by formula 7-4: $-(O-CH_2CH_2CH(CH_3))z_4-$, wherein $z_4$ is an integer from 2 to 80.

In one embodiment, it is more preferred that the polyetheramine (C) has a polyether chain, and the polyether chain has a structure comprising at least one selected from the group consisting of:

a structure represented by formula 5: $-(O-CH_2CH_2)x-$, wherein x is an integer from 2 to 120,
a structure represented by formula 6-1: $-(O-CH_2CH(CH_3))y_1-$, wherein $y_1$ is an integer from 2 to 90, and
a structure represented by formula 7-1: $-(O-CH_2CH_2CH_2CH_2)z_1-$, wherein $z_1$ is an integer from 2 to 80.

In one embodiment, it is even more preferred that the polyetheramine (C) is a compound represented by the following formula 5A:

$$R^6-(O-R^7)a-R^8 \qquad \text{Formula 5A}$$

wherein

$R^6$ and $R^8$ each independently represent an amino group or a linear or branched alkyl group having 1 to 10 (1, 2, 3, 4, 5, 6, 7, 8, 9, or 10) carbon atoms and optionally having an amino group,
$R^7$ represents a linear or branched alkylene group having 2 to 4 (2, 3, or 4) carbon atoms, and
a is an integer from 2 to 120.

In formula 5A, examples of linear or branched alkyl groups having 1 to 10 (1, 2, 3, 4, 5, 6, 7, 8, 9, or 10) carbon atoms include a methyl group, an ethyl group, an n-propyl group, an isopropyl group, an n-butyl group, an isobutyl group, a sec-butyl group, a tert-butyl group, an n-hexyl group, an n-heptyl group, an n-octyl group, an n-nonyl group, an n-decyl group, and the like.

In formula 5A, the linear or branched alkylene group having 2 to 4 (2, 3, or 4) carbon atoms is preferably an ethylene group ($-CH_2CH_2-$), a methylethylene group ($-CH_2CH(CH_3-$), an n-propylene group ($-CH_2CH_2CH_2-$), a 1-methylpropylene group ($-CH(CH_3)CH_2CH_2-$), a 2-methylpropylene group ($-CH_2CH(CH_3)CH_2-$), a 3-methylpropylene group ($-CH_2CH_2CH(CH_3)-$), or an n-butylene group ($-CH_2CH_2CH_2CH_2-$).

In formula 5A, it is preferred that $R^6$ represents a linear or branched alkyl group having 1 to 10 (1, 2, 3, 4, 5, 6, 7, 8, 9, or 10) carbon atoms, $R^7$ represents a linear or branched alkylene group having 2 to 4 (2, 3, or 4) carbon atoms, $R^8$ represents an amino group, and a is an integer from 1 to 120.

In one embodiment, it is preferred that the polyetheramine (C) has a primary amino group or a secondary amino group at one end thereof and has a weight average molecular weight (Mw) of 200 to 50000. In one embodiment, it is more

preferred that the polyetheramine (C) has a primary amino group or a secondary amino group at one end thereof and has a weight average molecular weight (Mw) of 200 to 5000. In one embodiment, it is even more preferred that the polyetheramine (C) has a primary amino group at one end thereof and has a weight average molecular weight (Mw) of 500 to 5000.

In one embodiment, from the viewpoint of stably dissolving and/or dispersing the acid-modified polyolefin resin (A) in the compound having a polymerizable unsaturated group (B), the polyetheramine (C) is typically a polymer compound with a weight average molecular weight (Mw) of 200 to 50000. The polyetheramine (C) with Mw within this range tends to have increased steric repulsion in the compound having a polymerizable unsaturated group (B), thereby enabling stable dispersion and/or dissolution of the acid-modified polyolefin resin (A) in the compound having a polymerizable unsaturated group (B). In one embodiment, the Mw of the polyetheramine (C) is typically 200 to 50000, preferably 300 to 20000, more preferably 350 to 10000, even more preferably 450 to 7000, and particularly preferably 500 to 5000.

The weight average molecular weight (Mw) of the polyetheramine (C) in the present invention can be determined through measurement by GPC and calculation from a polystyrene calibration curve. The GPC measurement is performed using a commercially available apparatus according to a known method, with THF or the like as a solvent.

In one embodiment, the polyetheramine (C) preferably has an HLB value of 2 to 20, more preferably 5 to 19, and even more preferably 8 to 18. The polyetheramine (C) with an HLB value within a range of 2 to 20 enables the modified polyolefin resin composition to maintain fluidity even more favorably.

In present specification, the HLB value refers to a value indicating the degree of hydrophilicity or lipophilicity (hydrophobicity) of the polyetheramine (C). The HLB value is a value calculated according to Griffin's method. In Griffin's method, the HLB value is calculated based on the following equation (8):

$$\text{HLB value} = 20 \times \text{sum of molecular mass of hydrophilic portion/molecular mass} \qquad \text{Equation (8)}$$

The polyetheramine (C) can be bonded to the acid-modified polyolefin resin (A) through various reaction schemes. Examples of such reaction schemes include reaction schemes that form covalent bonds and/or ionic bonds. More specifically, examples include amidation between a carboxylic anhydride group and a primary or secondary amino group; imidation; and neutralization between a carboxylic group and a primary or secondary amino group.

The polyetheramine (C) for use can be selected from a wide range of known commercially available products. Examples of commercially available products of the polyetheramine (C) include those manufactured by HUNTSMAN Corporation, such as the following:

JEFFAMINE M-600 (MW = 600, HLB value = 2.1),
JEFFAMINE M-1000 (MW = 1000, HLB value = 16.1),
JEFFAMINE M-2005 (MW = 2000, HLB value = 2.7),
JEFFAMINE M-2070 (MW = 2000, HLB value = 13.8),
JEFFAMINE M-3085 (MW = 3000, HLB value = 16.8),
JEFFAMINE D-230 (MW = 230, HLB value = 3.6),
JEFFAMINE D-400 (MW = 430, HLB value = 1.7),
JEFFAMINE D-2000 (MW = 2000, HLB value = 0.3),
JEFFAMINE D-4000 (MW = 4000, HLB value = 0.2),
JEFFAMINE ED-600 (MW = 600, HLB value = 13.4),
JEFFAMINE ED-900 (MW = 900, HLB value = 12.5), and
JEFFAMINE ED-2003 (MW = 2000, HLB value = 16.7).

These commercially available products can be used either individually or in a combination of two or more.

In one embodiment, from the viewpoint of maintaining the fluidity of the modified polyolefin resin composition even more favorably and further improving water resistance and its adhesion to polyolefin substrates, the polyetheramine (C) is typically contained in an amount of 6 to 100 parts by mass, preferably 10 to 90 parts by mass, more preferably 15 to 80 parts by mass, even more preferably 20 to 70 parts by mass, still more preferably 25 to 60 parts by mass, and particularly preferably 30 to 50 parts by mass, per 100 parts by mass of the acid-modified polyolefin resin (A).

In one embodiment, from the viewpoint of maintaining the fluidity of the modified polyolefin resin composition even more favorably and further improving water resistance and its adhesion to polyolefin substrates, the content ratio of the polyetheramine (C) to the total mass of the modified polyolefin resin composition is typically 0.5 to 40 mass%, preferably 1 to 30 mass%, more preferably 2 to 25 mass%, even more preferably 3 to 15 mass%, still more preferably 4 to 15 mass%, and particularly preferably 5 to 10 mass%.

In one embodiment, the total content ratio of the acid-modified polyolefin resin (A) and the compound having a polymerizable unsaturated group (B) to the total mass of the modified polyolefin resin composition is preferably in the order of more than 50 mass%, 60 mass% or more, 70 mass% or more, 80 mass% or more, 85 mass% or more, 90 mass% or

more, 91 mass% or more, 92 mass% or more, 92.5 mass% or more, 95 mass% or more, 97.5 mass% or more, 99 mass% or more, 99.5 mass% or more, and 99.9 mass% or more.

Measurement Method for Elongation at Break of Cured Product Obtained by Curing Modified Polyolefin Resin Composition

The elongation at break of a cured coating film of the modified polyolefin resin composition can be measured according to the following method.

2 parts by mass of tert-butyl-2-ethylperoxyhexanoate is mixed with 100 parts by mass of a compound having a polymerizable unsaturated group (B), and the mixture liquid is applied to a Teflon (registered trademark) sheet. Subsequently, the applied mixture liquid is cured at 110°C for 1 minute to produce a cured coating film with a thickness of 100 $\mu$m. The elongation at break of the cured coating film is measured using a tensile tester (Tensilon RTM-100, manufactured by Orientec Corporation) until the film is fractured under the following conditions: a width of 10 mm, a grip-to-grip distance of 30 mm, a tensile speed of 100 mm/min, an atmosphere at a temperature of 20°C and a relative humidity of 65%. The elongation at break of the modified polyolefin resin composition is then calculated using the following equation (10).

Elongation at break (%) of a modified polyolefin resin composition = 100 $\times$ {(length at break) - (initial length before tensile test)}/initial length before tensile test     Equation (10)

Polymerization Initiator

In one embodiment, the modified polyolefin resin composition may contain a polymerization initiator as long as the effects of the present invention are not impaired. Due to the presence of a polymerization initiator, the polymerization reaction of the polymerizable unsaturated group in the compound (B) can proceed more smoothly, and a resin for forming a coating film can be more easily formed. In addition, the use of a polymerization initiator can further improve the corrosion resistance and durability of the coating film.

The amount of polymerization initiator used is preferably 0.1 to 20 parts by mass, more preferably 1 to 10 parts by mass, and even more preferably 2 to 5 parts by mass, per 100 parts by mass of the modified polyolefin resin composition, from the viewpoint of increasing the curing speed of the coating film obtained from the modified polyolefin resin composition.

Usable polymerization initiators are those that can initiate the polymerization reaction of the polymerizable unsaturated group. Examples include photopolymerization initiators that generate radicals by light, thermal polymerization initiators that generate radicals by heat, and the like. These polymerization initiators can be used alone or in a combination of two or more.

Photopolymerization initiators are compounds that generate radicals or acids when irradiated with ultraviolet or visible light and initiate a chain polymerization reaction. Examples of photopolymerization initiators include acetophenone-based photopolymerization initiators, benzoin-based photopolymerization initiators, benzophenone-based photopolymerization initiators, thioxanthone-based photopolymerization initiators, acylphosphine oxide-based photopolymerization initiators, titanocene-based photopolymerization initiators, and the like. These photopolymerization initiators can be used alone or in a combination of two or more.

Specific examples of acetophenone-based photopolymerization initiators include diethoxyacetophenone, 2-hydroxy-2-methyl-1-phenyl-propan-1-one, benzyldimethylketal, 4-(2-hydroxyethoxy)phenyl-(2-hydroxy-2-propyl)ketone, 1-hydroxycyclohexylphenylketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and the like. These can be used alone or in a combination of two or more.

Specific examples of benzoin-based photopolymerization initiators include benzoin methyl ether, benzoin ethyl ether, benzoin propyl ether, benzoin isopropyl ether, benzoin isobutyl ether, and the like. These can be used alone or in a combination of two or more.

Specific examples of benzophenone-based photopolymerization initiators include benzophenone, benzoylbenzoic acid, polyvinylbenzophenone, $\alpha$-hydroxycyclohexyl phenyl ketone, and the like. These can be used alone or in a combination of two or more.

Specific examples of thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, isopropylthioxanthone, 2,4-diisopropylthioxanthone, dodecylthioxanthone, and the like. These can be used alone or in a combination of two or more.

Specific examples of acylphosphine oxide-based photopolymerization initiators include bis(2,4,6-trimethylbenzoyl)-phenyl-phosphine oxide, ethoxyphenyl(2,4,6-trimethylbenzoyl)phosphine oxide, and the like. These can be used

alone or in a combination of two or more.

Specific examples of titanocene-based photopolymerization initiators include: bis(cyclopentadienyl)-bis[2,6-difluoro-3-(2-(1-pyr-1-yl)ethyl)phenyl]titanium, bis(cyclopentadienyl)-bis[2,6-difluoro-3-(3-(1-pyr-1-yl)propyl)phenyl]titanium, bis(cyclopentadienyl)-bis[2,6-difluoro-3-((1-pyr-1-yl)methyl)phenyl]titanium, bis(methylcyclopentadienyl)-bis[2,6-difluoro-3-((1-pyr-1-yl)methyl)phenyl]titanium, bis(cyclopentadienyl)-bis[2,6-difluoro-3-((2,5-dimethyl-1-pyr-1-yl)methyl)phenyl]titanium, bis(cyclopentadienyl)-bis[2,6-difluoro-3-((2-isopropyl-5-methyl-1-pyr-1,6-yl)methyl)phenyl]titanium, bis(cyclopentadienyl)-bis[2,6-difluoro-3-((2-(2-methoxyethyl)-5-methyl-1-pyr-1-yl)methyl)phenyl]titanium, and the like. These can be used alone or in a combination of two or more.

Thermal polymerization initiators are compounds that generate radicals by heating and initiate a chain polymerization reaction. Examples of thermal polymerization initiators include organic peroxides; inorganic peroxides, such as potassium persulfate, ammonium persulfate, and hydrogen peroxide; and the like. Specific examples of organic peroxides include: ketone peroxide compounds, such as methyl ethyl ketone peroxide, cyclohexanone peroxide, 3,3,5-trimethylcyclohexanone peroxide, methylcyclohexanone peroxide, methyl acetoacetate peroxide, and acetylacetone peroxide; peroxyketal compounds, such as 1,1-bis(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, and 2,2-bis(t-butylperoxy)butane; hydroperoxide compounds, such as t-butyl hydroperoxide, cumene hydroperoxide, diisopropylbenzene hydroperoxide, p-menthane hydroperoxide, 2,5-dimethylhexane-2,5-dihydroperoxide, and 1,1,3,3-tetramethylbutyl hydroperoxide; dialkyl peroxide compounds, such as t-butyl peroxide, t-butylcumyl peroxide, dicumyl peroxide, $\alpha,\alpha'$-bis(t-butylperoxy-m-isopropyl)benzene, 2,5-dimethyl-2,5-di(t-butylperoxy)hexane, and 2,5-dimethyl-2,5-di(t-butylperoxy)hexyne-3; diacyl peroxide compounds, such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichlorobenzoyl peroxide, and m-toluoyl peroxide; peroxydicarbonate compounds, such as diisopropyl peroxydicarbonate, di-2-ethylhexyl peroxydicarbonate, di-n-propyl peroxydicarbonate, bis-(4-t-butylcyclohexyl)peroxydicarbonate, dimyristyl peroxydicarbonate, di-2-ethoxyethyl peroxydicarbonate, dimethoxyisopropylperoxydicarbonate, di(3-methyl-3-methoxybutyl)peroxydicarbonate, and diallyl peroxydicarbonate; peroxyester compounds, such as t-butyl peroxyacetate, t-butyl peroxyisobutyrate, t-butyl peroxypivalate, t-butyl peroxyneodecanoate, cumyl peroxyneodecanoate, t-butyl peroxy-2-ethylhexanoate, t-butyl peroxy-3,5,5-trimethylhexanoate, t-butyl peroxylaurate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropylcarbonate, cumyl peroxyoctoate, t-hexyl peroxyneodecanoate, t-hexyl peroxypivalate, t-butyl peroxyneohexanoate, t-hexyl peroxyneohexanoate, and cumyl peroxyneohexanoate; acetyl cyclohexylsulfonyl peroxide, t-butyl peroxyallyl carbonate, and the like. These organic peroxides can be used alone or in a combination of two or more.

Ultraviolet Absorber

In one embodiment, the modified polyolefin composition may contain an ultraviolet absorber as long as the effects of the present invention are not impaired. Examples of ultraviolet absorbers include benzophenone-based ultraviolet absorbers, benzotriazole-based ultraviolet absorbers, triazine-based ultraviolet absorbers, salicylic acid-based ultraviolet absorbers, cyanoacrylate-based ultraviolet absorbers, benzoxazine-based ultraviolet absorbers, and the like. These ultraviolet absorbers can be used alone or in a combination of two or more.

The amount of ultraviolet absorber used is preferably 0.01 to 10 parts by mass, and more preferably 0.1 to 5 parts by mass, per 100 parts by mass of the modified polyolefin resin composition.

Light Stabilizer

In one embodiment, the modified polyolefin composition may contain a light stabilizer as long as the effects of the present invention are not impaired. Examples of light stabilizers include hindered amine-based light stabilizers.

Specific examples of hindered amine-based light stabilizers include bis(1,2,2,6,6-pentamethyl-4-piperidinyl) sebacate, methyl(1,2,2,6,6-pentamethyl-4-piperidinyl sebacate, 2,4-bis[N-butyl-N-(1-cyclohexyloxy-2,2,6,6-tetramethylpiperidin-4-yl)amino]-6-(2-hydroxyethylamine)-1,3,5-triazine, decanedioic acid bis(2,2,6,6-tetramethyl-1-(octyloxy)-4-piperidinyl) ester, and the like. These can be used alone or in a combination of two or more.

The amount of light stabilizer used is preferably 0.01 to 10, and more preferably 0.1 to 1 part by mass, per 100 parts by mass of the modified polyolefin resin composition.

Sensitizer

The modified polyolefin composition of the present embodiment may contain a sensitizer as long as the effects of the present invention are not impaired. Examples of sensitizers include unsaturated ketone compounds, such as chalcone and dibenzalacetone; 1,2-diketone compounds, such as benzyl and camphorquinone; benzoin compounds, fluorene

compounds, naphthoquinone compounds, anthraquinone compounds, xanthene compounds, thioxanthene compounds, xanthone compounds, thioxanthone compounds, coumarin compounds, ketocoumarin compounds; polymethine dyes, such as cyanine compounds, merocyanine compounds, and oxonol compounds; acridine compounds, azine compounds, thiazine compounds, oxazine compounds, indoline compounds, azulene compounds, azulenium compounds, squarylium compounds, porphyrin compounds, tetraphenylporphyrin compounds, triarylmethane compounds, tetrabenzoporphyrin compounds, tetrapyrazinoporphyrazine compounds, phthalocyanine compounds, tetraazaporphyrazine compounds, tetraquinoxalyloporphyrazine compounds, naphthalocyanine compounds, subphthalocyanine compounds, pyrylium compounds, thiopyrylium compounds, tetraphyrin compounds, annulene compounds, spiropyran compounds, spirooxazine compounds, thiospiropyran compounds, metal arene complexes, organic ruthenium complexes, Michler's ketone compounds, biimidazole compounds, and the like. These can be used alone or in a combination of two or more.

The amount of sensitizer used is preferably 0.01 to 10 parts by mass, and more preferably 0.1 to 5 parts by mass, per 100 parts by mass of the modified polyolefin resin composition.

Surfactant

The modified polyolefin resin composition in the present embodiment may contain a surfactant as long as the effects of the present invention are not impaired. Examples of surfactants include nonionic surfactants, anionic surfactants, cationic surfactants, amphoteric surfactants, and the like. These surfactants can be used alone or in a combination of two or more. Of these, it is preferable to use a nonionic surfactant or an anionic surfactant, and more preferable to use a nonionic surfactant, from the viewpoint of further improving the stability of the modified polyolefin resin composition and water resistance of the coating film obtained from the modified polyolefin resin composition.

Examples of nonionic surfactants include polyoxyethylene alkyl ethers, polyoxypropylene alkyl ethers, polyoxyethylene alkyl phenyl ethers, polyoxypropylene alkyl phenyl ethers, polyoxyethylene styrenated phenyl ethers, polyoxypropylene styrenated phenyl ethers, polyoxyethylene fatty acid esters, polyoxypropylene fatty acid esters, polyoxyethylene sorbitan fatty acid esters, polyoxypropylene sorbitan fatty acid esters, polyoxyethylene alkylamine ethers, polyoxypropylene alkylamine ethers, polyoxyethylene lanolin alcohol ethers, polyoxypropylene lanolin alcohol ethers, polyoxyethylene lanolin fatty acid esters, polyoxypropylene lanolin fatty acid esters, and (polyoxyethylene oxypropylene) block copolymers. These can be used alone or in a combination of two or more. Nonionic surfactants for use can be selected from a wide range of known commercial products, and examples include Emulmin series (manufactured by Sanyo Chemical Industries, Ltd.), Noigen series (manufactured by DKS Co., Ltd.), and Blaunon series (manufactured by Aoki Oil Industrial Co., Ltd.).

Examples of anionic surfactants include higher alkyl sulfuric ester salts, alkylaryl polyoxyethylene sulfuric ester salts, higher fatty acid salts, alkylaryl sulfonic acid salts, and alkyl phosphoric ester salts. These can be used alone or in a combination of two or more. Anionic surfactants for use can be selected from a wide range of known commercial products, and examples include Neocol series (manufactured by DKS Co. Ltd.) and Hitenol series (manufactured by DKS Co. Ltd.).

The amount of surfactant used is preferably 1 to 60 parts by mass, more preferably 3 to 40 parts by mass, and even more preferably 5 to 30 parts by mass, per 100 parts by mass of the acid-modified polyolefin resin (A), from the viewpoint of further improving the stability of the modified polyolefin resin composition and water resistance of the coating film obtained from the modified polyolefin resin composition.

Pigment

The paint containing the modified polyolefin resin composition in the present embodiment may contain a pigment. The pigment for use includes a coloring pigment, an extender pigment, a conductive pigment, and the like.

Examples of coloring pigments include titanium oxide, carbon black, yellow lead, yellow ocher, Hansa Yellow, Pigment Yellow, Chrome Orange, Permanent Orange, Permanent Red, Fast Violet, Methyl Violet Lake, Prussian blue, Cobalt Blue, Phthalocyanine Blue, Pigment Green, Naphthol Green, aluminum paste, and the like. These can be used alone or in a combination of two or more.

Examples of extender pigments include barium sulfate, talc, silica, and calcium carbonate. These can be used alone or in a combination of two or more.

The conductive pigment is not particularly limited as long as it can impart conductivity to coating films. Conductive pigments of any shape, such as particles, flakes, or fibers (including whiskers), can be used. Examples of conductive pigments include conductive carbon, carbon nanotubes, carbon nanofibers, silver, nickel, copper, graphite, aluminum, antimony-doped tin oxide, phosphorus-doped tin oxide, acicular titanium oxide coated with tin oxide/antimony, antimony oxide, zinc antimonate, indium tin oxide, and the like. These can be used alone or in a combination of two or more.

Various Additives

The modified polyolefin resin composition in the present embodiment may contain various additives, as necessary. Examples of such various additives include tackifiers, film-forming aids, antifoaming agents, anti-sagging agents, wetting agents, and the like.

Examples of tackifiers include rosin, dammar, polymerized rosin, hydrogenated rosin, ester rosin, rosin-modified maleic acid resin, polyterpene resin, petroleum resin, cyclopentadiene resin, phenol resin, xylene resin, coumarone-indene resin, and the like. These can be used alone or in a combination of two or more.

The amount of the tackifier used is preferably 1 to 50 parts by mass, and more preferably 10 to 25 parts by mass, per 100 parts by mass of the modified polyolefin resin composition.

Organic Solvent

The modified polyolefin resin composition in the present embodiment may contain or may not contain an organic solvent.

When the modified polyolefin resin composition in the present embodiment contains an organic solvent, it is preferred that the organic solvent is present in a small amount from environmental and hygiene perspectives. In that case, the amount of the organic solvent used is preferably 20 parts by mass or less, more preferably 10 parts by mass or less, even more preferably 5 parts by mass or less, still even more preferably 3 parts by mass or less, and particularly preferably 1 part by mass or less, per 100 parts by mass of the modified polyolefin resin composition. In one embodiment, the modified polyolefin resin composition contains an organic solvent and thus has further reduced viscosity, which is advantageous in terms of improving coating properties.

When the modified polyolefin resin composition in the present embodiment does not contain an organic solvent, the modified polyolefin resin composition in the present embodiment can be suitably used as the main agent of a solvent-free radically curable binder. In the present specification, "solvent-free" means that an organic solvent is not intentionally added to the modified polyolefin resin composition in the present embodiment. An embodiment in which the organic solvent used in the production of the acid-modified polyolefin resin (A) remains falls under the category of "solvent-free."

Examples of organic solvents include aromatic hydrocarbons, such as benzene, toluene, and xylene; aliphatic hydrocarbons, such as hexane, heptane, octane, and decane;

alicyclic hydrocarbons, such as cyclohexane, cyclohexene, methylcyclohexane, and ethylcyclohexane;
halogenated hydrocarbons, such as trichloroethylene, dichloroethylene, chlorobenzene, and chloroform;
alcohol-based solvents, such as methanol, ethanol, isopropyl alcohol, butanol, pentanol, 1-hexanol, 2-ethylhexanol, 2-methylcyclohexanol, phenol, and 2-heptyl alcohol;
ketone-based solvents, such as acetone, methyl isobutyl ketone, methyl ethyl ketone, pentanone, hexanone, cyclohexanone, isophorone, and acetophenone;
cellosolve-based solvents, such as methyl cellosolve and ethyl cellosolve;
ester-based solvents, such as methyl acetate, ethyl acetate, butyl acetate, methyl propionate, ethyl propionate, and butyl formate; and
ether-based solvents, such as ethylene glycol mono-n-butyl ether, ethylene glycol mono-iso-butyl ether, ethylene glycol mono-tert-butyl ether, diethylene glycol mono-n-butyl ether, diethylene glycol mono-iso-butyl ether, triethylene glycol mono-n-butyl ether, tetraethylene glycol mono-n-butyl ether, dibenzyl ether, diphenyl ether, and butylphenyl ether. These can be used alone or in a combination of two or more.

Properties of Modified Polyolefin Resin Composition

The elongation at break of the modified polyolefin resin composition in the present embodiment is preferably 5% or more. In this case, the cured coating film produced from the modified polyolefin resin composition exhibits excellent bending resistance. The elongation at break is preferably 10% or more, and more preferably 20%. The upper limit of the elongation at break of the modified polyolefin resin composition is preferably 2000% or less, more preferably 1500% or less, even more preferably 1000% or less, and further preferably 750% or less, from the viewpoint of further improving the workability in film formation. The elongation at break of the modified polyolefin resin composition can be measured according to the method described in section "Measurement Method for Elongation at Break of Modified Polyolefin Resin Composition" above.

Method for Producing Modified Polyolefin Resin Composition

As the method for producing the modified polyolefin resin composition in the present embodiment, known

methods can be widely used. For example, the method described in the following steps (1) to (3) can be used.

Step (1): The acid-modified polyolefin resin (A) and the compound having a polymerizable unsaturated group (B) are placed in a stirrer equipped with a heating device and kneaded while heating.
Step (2): The polyetheramine (C) is further added to the stirrer and kneaded while heating.
Step (3): Thereafter, the mixture is cooled to room temperature and filtered to obtain a modified polyolefin resin composition.

In step (1), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 60 minutes.
In step (2), the heating temperature during kneading is generally 50 to 200°C, preferably 60°C to 150°C, and more preferably 70°C to 120°C. The kneading time varies depending on the heating temperature etc., but is generally 10 minutes to 120 minutes, preferably 15 minutes to 90 minutes, and more preferably 20 minutes to 75 minutes.
In step (3), filtration can be carried out using, for example, a wire mesh with an opening of 50 μm to 300 μm.

Cured Product

The cured product in the present embodiment is a cured product obtained by curing the modified polyolefin resin composition of this embodiment. In other words, the cured product of this embodiment is a cured product of the modified polyolefin resin composition of this embodiment. Hereinafter, the cured product is simply referred to as "the cured product of this embodiment."

Use

The modified polyolefin resin composition of this embodiment and the cured product of this embodiment can be suitably used for polyolefin substrates. Examples of polyolefin substrates include blocks (plates, rods, spheres, etc.), sheets, films, threads, and fabrics (woven fabrics, knitted fabrics, nonwoven fabrics, etc.) processed from polyolefins. Of these polyolefin substrates, sheets and films are preferred from the production viewpoint. The film thickness may be 5 μm to 100 μm. Examples of polyolefins include polypropylene, polyethylene, ethylene-propylene copolymers, ethylene-propylene-diene copolymers, polybutene, poly(4-methyl-1-pentene), and the like. The modified polyolefin resin composition of this embodiment and the cured product of this embodiment can be particularly suitably used for polypropylene substrates.
The modified polyolefin resin composition of this embodiment and the cured product of this embodiment can be suitably applied to paints for molded articles, inks, adhesives, sealants, primers, coating agents, in-mold coating paints, and the like. The modified polyolefin resin composition of this embodiment and the cured product of this embodiment can be particularly suitably used for inks for polyolefin substrates, adhesives for polyolefin substrates, primers for polyolefin substrates, paints for polyolefin substrates, and in-mold coating paints for polyolefin substrates.
A coating film can be obtained from the modified polyolefin resin composition of this embodiment. The coating film can be particularly suitably used for metal products, electronic devices, packaging materials, automotive parts, and the like.
The method for producing a coating film from the modified polyolefin resin composition of this embodiment is, for example, a method in which the modified polyolefin resin composition of this embodiment is uniformly applied to the surface of various substrates and subjected to heat treatment (e.g., baking treatment). As a result, a uniform coating film can be formed on various substrate surfaces. Examples of the coating method include gravure coating, curtain flow coating, Mayer bar coating, dip coating, brush coating, roll coating, spray coating, and the like. The amount of the modified polyolefin resin composition applied to the substrate is not particularly limited, and is appropriately selected depending on the application. It is preferable that the thickness of the dry coating film is within the range of 1 μm to 100 μm. The heat treatment can be carried out using a hot-air circulation oven, an infrared heater, or the like. Another method includes molding a plastic substrate in a mold, injecting the modified polyolefin resin composition of this embodiment between the mold and the substrate, and then applying heat and pressure to form a coating film. The heating temperature is generally 60 to 200°C. The heating time is generally 15 seconds to 20 minutes.
The present invention provides the following aspects.
Item 1. A modified polyolefin resin composition comprising an acid-modified polyolefin resin (A) and a compound having a polymerizable unsaturated group (B),
wherein the compound having a polymerizable unsaturated group (B) comprises a compound having a polymerizable unsaturated group with an elongation at break of 30% or more (B-1).
Item 2. The modified polyolefin resin composition according to Item 1,

wherein the acid-modified polyolefin resin (A) is contained in an amount of preferably 10 to 50 parts by mass, more preferably 12 to 45 parts by mass, even more preferably 15 to 40 parts by mass, and still more preferably 18 to 35 parts by mass, per 100 parts by mass of the compound having a polymerizable unsaturated group (B).

Item 3. The modified polyolefin resin composition according to Item 1 or 2,
wherein the compound having a polymerizable unsaturated group with an elongation at break of 30% or more (B-1) is preferably at least one compound selected from the group consisting of urethane (meth)acrylate, epoxy (meth)acrylate, polyester (meth)acrylate, polyether (meth)acrylate, and vinyl ester,

more preferably at least one compound selected from the group consisting of urethane (meth)acrylate, polyester (meth)acrylate, and vinyl ester, and
even more preferably urethane (meth)acrylate and/or vinyl ester.

Item 4. The modified polyolefin resin composition according to any one of Items 1 to 3,
wherein the compound having a polymerizable unsaturated group (B) comprises a compound having a polymerizable unsaturated group with an elongation at break of less than 30% (B-2).

Item 5. The modified polyolefin resin composition according to Item 4,
wherein the ratio by mass of the compound having a polymerizable unsaturated group with an elongation at break of 30% or more (B-1) to the compound having a polymerizable unsaturated group with an elongation at break of less than 30% (B-2) is the following:

preferably (B-1):(B-2) = 99:1 to 5:95,
more preferably (B-1):(B-2) = 80:20 to 20:80,
even more preferably (B-1):(B-2) = 65:35 to 25:75, and
still more preferably (B-1):(B-2) = 40:60 to 60:40.

Item 6. The modified polyolefin resin composition according to Item 4 or 5,
wherein the compound having a polymerizable unsaturated group with an elongation at break of less than 30% (B-2) comprises a compound having an alkyleneoxy group and/or a linear or branched alkyl group having 1 to 20 carbon atoms (1, 2, 3, 4, 5, 6, 7, 8, 9, 10, 11, 12, 13, 14, 15, 16, 17, 18, 19, or 20), and one or more (typically 1 to 4, preferably 1 to 3, more preferably 1 or 2) polymerizable unsaturated groups (B-21).

Item 7. The modified polyolefin resin composition according to any one of Items 4 to 6,
wherein the compound having a polymerizable unsaturated group with an elongation at break of less than 30% (B-2) comprises a compound having a hydroxyl group and one or more (typically 1 to 4, preferably 1 to 3, more preferably 1 or 2, and even more preferably 2) polymerizable unsaturated groups (B-211).

Item 8. The modified polyolefin resin composition according to any one of Items 4 to 7,
wherein the compound having a polymerizable unsaturated group with an elongation at break of less than 30% (B-2) comprises a compound containing a unit with a carbonyl group and one or more (typically 1 to 4, preferably 1 to 3, more preferably 1 or 2, and even more preferably 1) polymerizable unsaturated groups (B-22).

Item 9. The modified polyolefin resin composition according to Item 8,
wherein the unit with a carbonyl group is represented by the following formula (1) or the following formula (2):

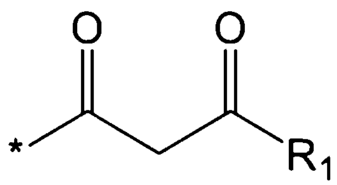

(1)

wherein
$R_1$ represents a hydrogen atom or a methyl group, and asterisk * represents a binding site,

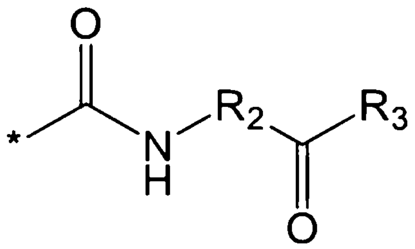

(2)

wherein

$R_2$ represents an optionally substituted hydrocarbon group having 1 to 10 (1, 2, 3, 4, 5, 6, 7, 8, 9, or 10) carbon atoms,
$R_3$ represents a hydrogen atom, or an optionally substituted hydrocarbon group having 1 to 10 (1, 2, 3, 4, 5, 6, 7, 8, 9, or 10) carbon atoms, and
asterisk * represents a binding site,
with the proviso that the optionally substituted hydrocarbon groups having 1 to 10 (1, 2, 3, 4, 5, 6, 7, 8, 9, or 10) carbon atoms represented by $R_2$ and $R_3$ may each independently further have a branched structure, an alicyclic structure (preferably cyclohexyl), or an aromatic ring structure (preferably phenyl or naphthyl, more preferably phenyl).

Item 10. The modified polyolefin resin composition according to any one of Items 1 to 9,
wherein the modified polyolefin resin composition comprises a polyetheramine (C).
Item 11. The modified polyolefin resin composition according to Item 10,
wherein the polyetheramine (C) is contained in an amount of typically 6 to 100 parts by mass, preferably 10 to 90 parts by mass, more preferably 15 to 80 parts by mass, even more preferably 20 to 70 parts by mass, still more preferably 25 to 60 parts by mass, and particularly preferably 30 to 50 parts by mass, per 100 parts by mass of the acid-modified polyolefin resin (A) .
Item 12. The modified polyolefin resin composition according to Item 10 or 11,
wherein

the polyetheramine (C) preferably has a primary amino group or a secondary amino group at one end thereof and has a weight average molecular weight (Mw) of 200 to 50000,
the polyetheramine (C) more preferably has a primary amino group or a secondary amino group at one end thereof and has a weight average molecular weight (Mw) of 200 to 5000, and
the polyetheramine (C) even more preferably has a primary amino group at one end thereof and has a weight average molecular weight (Mw) of 500 to 5000.

Item 13. The modified polyolefin resin composition according to any one of Items 1 to 12,
wherein the acid-modified polyolefin resin (A) is a graft polymer having a structure in which an $\alpha,\beta$-unsaturated carboxylic and/or an acid anhydride thereof is grafted to a polyolefin resin.
Item 14. The modified polyolefin resin composition according to Item 13,

wherein the polyolefin resin is
typically homopolypropylene (a homopolymer of propylene), a propylene-$\alpha$-olefin copolymer, homopolyethylene (a homopolymer of ethylene), an ethylene-$\alpha$-olefin copolymer, homopoly-1-butene, or a 1-butene-$\alpha$-olefin copolymer,
preferably homopolypropylene and/or a propylene-$\alpha$-olefin copolymer, and
more preferably a propylene-$\alpha$-olefin copolymer.

Item 15. The modified polyolefin resin composition according to Item 14,
wherein the content of a propylene component in the propylene-$\alpha$-olefin copolymer is preferably 50 mol% or more, more preferably 55 mol% or more, even more preferably 60 mol% or more, still more preferably 65 mol% or more, and particularly preferably 70 mol% or more.
Item 16. The modified polyolefin resin composition according to any one of Items 1 to 15,
wherein the content ratio of the acid-modified polyolefin resin (A) to the total mass of the modified polyolefin resin composition is preferably 5 to 50 mass%, more preferably 7 to 45 mass%, even more preferably 10 to 40 mass%, and still more preferably 15 to 35 mass%.
Item 17. The modified polyolefin resin composition according to any one of Items 1 to 16,
wherein the content ratio of the compound having a polymerizable unsaturated group (B) to the total mass of the modified polyolefin resin composition is preferably 10 to 90 mass%, more preferably 20 to 85 mass%, and even more preferably 30

to 80 mass%.

Item 18. The modified polyolefin resin composition according to any one of Items 1 to 17, wherein the number of polymerizable unsaturated groups in the compound having a polymerizable unsaturated group (B) is typically 1, 2, 3, or 4, preferably 1, 2, or 3, and more preferably 1 or 2.

Item 19. The modified polyolefin resin composition according to any one of Items 1 to 18, wherein the elongation at break of the compound having a polymerizable unsaturated group (B-1) is preferably 100% or more, more preferably 300% or more, and even more preferably 500% or more.

Item 20. The modified polyolefin resin composition according to any one of Items 1 to 19, wherein the elongation at break of the compound having a polymerizable unsaturated group (B-1) is 2000% or less.

Item 21. The modified polyolefin resin composition according to any one of Items 4 to 20, wherein the elongation at break of the compound having a polymerizable unsaturated group (B-2) is preferably 20% or less, and more preferably 10% or less.

Item 22. The modified polyolefin resin composition according to any one of Items 4 to 21, wherein the total content ratio of the compound having a polymerizable unsaturated group with an elongation at break of 30% or more (B-1) and the compound having a polymerizable unsaturated group with an elongation at break of less than 30% (B-2) to the total mass of the modified polyolefin resin composition is typically more than 50 mass%, preferably 60 mass% or more, more preferably 65 mass% or more, even more preferably 70 mass% or more, and still more preferably 72.5 mass% or more.

Item 23. The modified polyolefin resin composition according to any one of Items 1 to 22, wherein the total content ratio of the acid-modified polyolefin resin (A) and the compound having a polymerizable unsaturated group (B) to the total mass of the modified polyolefin resin composition is, preferably in the order of, more than 50 mass%, 60 mass% or more, 70 mass% or more, 80 mass% or more, 85 mass% or more, 90 mass% or more, 91 mass% or more, 92 mass% or more, 92.5 mass% or more, 95 mass% or more, 97.5 mass% or more, 99 mass% or more, 99.5 mass% or more, and 99.9 mass% or more.

Item 24. The modified polyolefin resin composition according to any one of Items 4 to 23, wherein the total content ratio of the acid-modified polyolefin resin (A), the compound having a polymerizable unsaturated group with an elongation at break of 30% or more (B-1), and the compound having a polymerizable unsaturated group with an elongation at break of less than 30% (B-2) to the total mass of the modified polyolefin resin composition is, preferably in the order of, more than 50 mass%, 60 mass% or more, 70 mass% or more, 80 mass% or more, 85 mass% or more, 90 mass% or more, 91 mass% or more, 92 mass% or more, 92.5 mass% or more, 95 mass% or more, 97.5 mass% or more, 99 mass% or more, 99.5 mass% or more, and 99.9 mass% or more.

Item 25. The modified polyolefin resin composition according to any one of Items 4 to 24,

> wherein the compound having a polymerizable unsaturated group with an elongation at break of less than 30% (B-2) is at least one compound selected from the group consisting of
> a compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms, and one or more (typically 1 to 4, preferably 1 to 3, more preferably 1 or 2) polymerizable unsaturated groups (B-21),
> a compound having a hydroxyl group and one or more (typically 1 to 4, preferably 1 to 3, more preferably 1 or 2, and even more preferably 2) polymerizable unsaturated groups (B-211), and
> a compound containing the unit with a carbonyl group and one or more (typically 1, 2, 3, or 4, preferably 1, 2, or 3, more preferably 1 or 2, and even more preferably 1) polymerizable unsaturated groups (B-22).

Item 26. The modified polyolefin resin composition according to any one of Items 8 to 25, wherein the compound (B-22) is a compound having the group represented by formula (1) or formula (2) and one or more (typically 1, 2, 3, or 4, preferably 1, 2, or 3, more preferably 1 or 2, and even more preferably 1) polymerizable unsaturated groups (B-221).

Item 27. The modified polyolefin resin composition according to any one of Items 1 to 26, wherein the weight average molecular weight (Mw) of the compound having a polymerizable unsaturated group (B) is typically 5000 or less, preferably 3000 or less, more preferably 2000 or less, even more preferably 1500 or less, and still more preferably 1000 or less.

Item 28. The modified polyolefin resin composition according to any one of Items 6 to 27, wherein the content ratio of the compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms, and one or more (typically 1 to 4, preferably 1 to 3, and more preferably 1 or 2) polymerizable unsaturated groups (B-21) to the total mass of the modified polyolefin resin composition is preferably 1 to 80 mass%, more preferably 2 to 75 mass%, even more preferably 3 to 70 mass%, still more preferably 10 to 65 mass%, and still more preferably 15 to 60 mass%.

Item 29. The modified polyolefin resin composition according to any one of Items 7 to 28,

wherein the content ratio of the compound having a hydroxyl group and one or more (typically 1 to 4, preferably 1 to 3, more preferably 1 or 2, and even more preferably 2) polymerizable unsaturated groups (B-211) to the total mass of the modified polyolefin resin composition is preferably 1 to 50 mass%, more preferably 2 to 45 mass%, even more preferably 3 to 40 mass%, still more preferably 10 to 35 mass%, and still more preferably 15 to 30 mass%.

Item 30. The modified polyolefin resin composition according to any one of Items 8 to 29,
wherein the content ratio of the compound having the unit with a carbonyl group and one or more (typically 1, 2, 3, or 4, preferably 1, 2, or 3, more preferably 1 or 2, and even more preferably 1) polymerizable unsaturated groups (B-22) to the total mass of the modified polyolefin resin composition is preferably 1 to 50 mass%, more preferably 2 to 48 mass%, even more preferably 3 to 45 mass%, still more preferably 10 to 42 mass%, and still more preferably 15 to 40 mass%.

Item 31. The modified polyolefin resin composition according to any one of Items 26 to 30,
wherein the content ratio of the compound having the group represented by the formula (1) or the formula (2) and one or more (typically 1, 2, 3, or 4, preferably 1, 2, or 3, more preferably 1 or 2, and even more preferably 1) polymerizable unsaturated groups (B-221) to the total mass of the modified polyolefin resin composition is preferably 1 to 50 mass%, more preferably 2 to 48 mass%, even more preferably 3 to 45 mass%, still more preferably 10 to 42 mass%, and still more preferably 15 to 40 mass%.

Item 32. The modified polyolefin resin composition according to any one of Items 1 to 31,

wherein the polymerizable unsaturated group is
preferably at least one selected from the group consisting of an acryloyl group, a methacryloyl group, an acryloyloxy group, a methacryloyloxy group, a vinyl group, an allyl group, a propenyl group, an isopropenyl group, a maleimide group, and a vinyl ether group,
more preferably at least one selected from the group consisting of an acryloyl group, a methacryloyl group, an acryloyloxy group, and a methacryloyloxy group, and
even more preferably an acryloyloxy group and/or a methacryloyloxy group.

Item 33. The modified polyolefin resin composition according to any one of Items 6 to 32,
wherein the compound (B-21) is at least one compound selected from the group consisting of a compound having a linear or branched alkyl group having 1 to 20 (1, 2, 3, 4, 5, 6, 7, 8, 9, 10, 11, 12, 13, 14, 15, 16, 17, 18, 19, or 20) carbon atoms, optionally with an alicyclic structure (preferably cyclohexyl), and one or two (meth)acryloyloxy groups; and a compound having an alkyleneoxy group and one or two (meth)acryloyloxy groups.

Item 34. The modified polyolefin resin composition according to any one of Items 7 to 33,
wherein the compound (B-211) is a compound having one or two (preferably one) hydroxyl groups and one or two (preferably two) (meth)acryloyloxy groups.

Item 35. The modified polyolefin resin composition according to any one of Items 8 to 34,
wherein the compound (B-22) is a group having the group represented by the formula (1) and one or two (more preferably one) (meth)acryloyloxy groups.

Item 36. The modified polyolefin resin composition according to any one of Items 10 to 35,
wherein the content ratio of the polyetheramine (C) to the total mass of the modified polyolefin resin composition is typically 0.5 to 40 mass%, preferably 1 to 30 mass%, more preferably 2 to 25 mass%, even more preferably 3 to 20 mass%, still more preferably 4 to 15 mass%, and particularly preferably 5 to 10 mass%.

Item 37. The modified polyolefin resin composition according to any one of Items 10 to 36,
wherein the polyetheramine (C) has an HLB value of preferably 2 to 20, more preferably 5 to 19, and even more preferably 8 to 18.

Item 38. The modified polyolefin resin composition according to any one of Items 10 to 37,
wherein the polyetheramine (C) has a polyether chain, and the polyether chain has a structure comprising at least one selected from the group consisting of:

a structure represented by formula 5: $-(O-CH_2CH_2)x-$, wherein x is an integer from 2 to 120,
a structure represented by formula 6-1: $-(O-CH_2CH(CH_3))y_1-$, wherein $y_1$ is an integer from 2 to 90,
a structure represented by formula 6-2: $-(O-CH_2CH_2CH_2)y_2-$, wherein $y_2$ is an integer from 2 to 90,
a structure represented by formula 7-1: $-(O-CH_2CH_2CH_2CH_2)z_1-$, wherein $z_1$ is an integer from 2 to 80,
a structure represented by formula 7-2: $-(O-CH(CH_3)\ CH_2CH_2)z_2-$, wherein $z_2$ is an integer from 2 to 80,
a structure represented by formula 7-3: $-(O-CH_2CH(CH_3)CH_2)z_3-$, wherein $z_3$ is an integer from 2 to 80, and
a structure represented by formula 7-4: $-(O-CH_2CH_2CH(CH_3))z_4-$, wherein $z_4$ is an integer from 2 to 80.

Item 39. The modified polyolefin resin composition according to any one of Items 10 to 38,
wherein the polyetheramine (C) has a polyether chain, and the polyether chain has a structure comprising at least one selected from the group consisting of:

a structure represented by formula 5: $-(O-CH_2CH_2)x-$, wherein x is an integer from 2 to 120,
a structure represented by formula 6-1: $-(O-CH_2CH(CH_3))y_1-$, wherein $y_1$ is an integer from 2 to 90, and
a structure represented by formula 7-1: $-(O-CH_2CH_2CH_2CH_2)z_1-$, wherein $z_1$ is an integer from 2 to 80.

Item 40. The modified polyolefin resin composition according to any one of Items 10 to 39, wherein the polyetheramine (C) is represented by the following formula 5A:

$R^6-(O-R^7)a-R^8$ Formula 5A

wherein

$R^6$ and $R^8$ each independently represent an amino group or a linear or branched alkyl group having 1 to 10 (1, 2, 3, 4, 5, 6, 7, 8, 9, or 10) carbon atoms and optionally having an amino group,
$R^7$ represents a linear or branched alkylene group having 2 to 4 (2, 3, or 4) carbon atoms, and
a is an integer from 2 to 120.

Item 41. The modified polyolefin resin composition according to Item 40,

wherein in the formula 5A,
$R^6$ represents a linear or branched alkyl group having 1 to 10 (1, 2, 3, 4, 5, 6, 7, 8, 9, or 10) carbon atoms,
$R^7$ represents a linear or branched alkylene group having 2 to 4 (2, 3, or 4) carbon atoms,
$R^8$ represents an amino group, and
a is an integer from 1 to 120.

Item 42. A cured product obtained by curing the modified polyolefin resin composition of any one of Items 1 to 41.
Item 43. An ink comprising the modified polyolefin resin composition of any one of Items 1 to 41 or the cured product of Item 42.
Item 44. An adhesive comprising the modified polyolefin resin composition of any one of Items 1 to 41 or the cured product of Item 42.
Item 45. A primer comprising the modified polyolefin resin composition of any one of Items 1 to 41 or the cured product of Item 42.
Item 46. A paint comprising the modified polyolefin resin composition of any one of Items 1 to 41 or the cured product of Item 42.
Item 47. An in-mold coating paint comprising the modified polyolefin resin composition of any one of Items 1 to 41 or the cured product of Item 42.

## Examples

Next, the present invention is described in detail based on Examples; however, the present invention is not limited to the following Examples. Hereinafter, "room temperature" refers to a temperature within the range of 20°C to 25°C.

### (1) Measurement of Weight Average Molecular Weight (Mw) by High-temperature GPC

The measurement was performed by using orthodichlorobenzene as a solvent at 140°C with a GPC150-C Plus (manufactured by Waters Corporation; column: GMH6-HT + GMH6-HTL manufactured by Tosoh Corporation). The weight average molecular weight (Mw) was calculated based on polystyrene of known molecular weight as the standard substance.

### (2) Measurement of Melting Point by Differential Scanning Calorimeter (DSC)

In accordance with JIS K7121-2012, with a DSC meter (manufactured by Seiko Instruments Inc.), about 5 mg of a sample was maintained in a heated and melted state at 150°C for 10 minutes and then cooled at a rate of 10°C/minute until the sample was stabilized and maintained at -50°C. The sample was further heated at a rate of 10°C/minute to 150°C, and the peak melting temperature at which the sample was melted was measured and evaluated as the melting point.

### Production Example 1

280 g of a propylene-α-olefin copolymer (propylene content: 70 mol%), 70 g of maleic anhydride, 7 g of dicumyl

peroxide, and 420 g of toluene were added to an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of modified polyolefin resin (MPO-1). The results of infrared absorption spectroscopy indicated that the acid value of the maleic anhydride component and maleic acid component in MPO-1 was 22.4 mgKOH/g. The total content of the maleic anhydride component and maleic acid component in MPO-1 was 2.0 mass%. The weight average molecular weight (Mw) of MPO-1 measured by high-temperature GPC was 40,000, and the melting point of MPO-1 measured by DSC was 70°C.

Production Example 2

280 g of a propylene-α-olefin copolymer (propylene content = 94 mol%), 14 g of maleic anhydride, 5.6 g of dicumyl peroxide, and 420 g of toluene were placed in an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. After drying under reduced pressure, 280 g of the resulting maleic anhydride-modified polyolefin resin and 2520 g of chloroform were placed in an autoclave equipped with a stirrer, which was then purged with nitrogen for about 5 minutes. Thereafter, the autoclave was heated to 110°C to fully dissolve the resin. Subsequently, 1.4 g of tert-butylperoxy-2-ethylhexanoate was added, and a predetermined amount of chlorine gas was blown into the autoclave. The reaction solvent, chloroform, was distilled off under reduced pressure, and the residue was dried, thereby obtaining a solid of acid-modified chlorinated polyolefin resin (CPO-1). The weight average molecular weight (Mw) of CPO-1 measured by high-temperature GPC was 80000, and the melting point measured by DSC was 75°C. Further, the chlorine content in CPO-1 was 30 mass%, and the acid value of the maleic anhydride component was 16.8 mgKOH/g.

Materials Used

The materials used in the Examples and Comparative Examples are as follows. The values of elongation at break of (B-1), (B-21), (B-211), and (B-22) described below are values measured according to the procedure described in section "Measurement Method for Elongation at Break of Compound Having Polymerizable Unsaturated Group (B)" above.

Acid-modified Polyolefin Resin (A)

- MPO-1 obtained in Production Example 1 (the total content of the maleic anhydride component and the maleic acid component = 2.0 mass%, MW = 40,000 as measured by high-temperature GPC, melting point = 70°C as measured by DSC)
- CPO-1 obtained in Production Example 2 (the chlorine content = 30 mass%, the maleic anhydride component content = 1.5 mass%, MW = 80000 as measured by high-temperature GPC, melting point = 75°C as measured by DSC)

Compound Having Polymerizable Unsaturated Group with Elongation at Break of 30% or More (B-1)

- Urethane acrylate 1: KRM9276 (manufactured by DAICEL-ALLNEX LTD.), elongation at break = 790%
- Urethane acrylate 2: EBECRYL 8413 (manufactured by DAICEL-ALLNEX LTD.), elongation at break = 460%
- Polyester acrylate: EBECRYL 525 (manufactured by DAICEL-ALLNEX LTD.), elongation at break = 50%
- Vinyl ester: VeoVa 10 (manufactured by Hexion Inc.), elongation at break = 550%

Compound Having Polymerizable Unsaturated Group with Elongation at Break of Less Than 30% (B-2)

[A compound having an alkyleneoxy group and/or a linear or branched alkyl group having 1 to 20 (1, 2, 3, 4, 5, 6, 7, 8, 9, 10, 11, 12, 13, 14, 15, 16, 17, 18, 19, or 20) carbon atoms, and one or more polymerizable unsaturated groups (B-21)]
(A compound having a branched C-10 alkyl group, an alicyclic structure, and one polymerizable unsaturated group)

- 4-Tert-butylcyclohexyl acrylate (Mw = 210) (manufactured by Tokyo Chemical Industry Co., Ltd.), elongation at break = 1%

(A compound having an alkyleneoxy group and two polymerizable unsaturated groups)

- 1,9-Nonanediol diacrylate (Mw = 268) (manufactured by Tokyo Chemical Industry Co., Ltd.), elongation at break = 12%
- Polypropylene glycol diacrylate (polypropylene glycol #700 diacrylate, number of repeating units = 12, Mw = 808, manufactured by Shin-Nakamura Chemical Co., Ltd., NK Ester (registered trademark), APG-700), elongation at break = 9%

[A compound having a hydroxyl group and one or more polymerizable unsaturated groups (B-211)]
(A compound having one hydroxyl group and two polymerizable unsaturated groups)

- 2-Hydroxy-3-methacrylpropyl acrylate (Mw = 214) (manufactured by Tokyo Chemical Industry Co., Ltd.), elongation at break = 2%

[A compound containing a unit with a carbonyl group represented by formula (1) and one or more polymerizable unsaturated groups (B-221)]

- Acetoacetoxyethyl methacrylate (Mw = 214) (manufactured by Tokyo Chemical Industry Co., Ltd.), elongation at break = 3%

Polyetheramine (C)

- JEFFAMINE M-2070 (Mw = 2000, HLB value = 13.8) manufactured by Huntsman (number of primary amino groups = 1, number of secondary amino groups = 0)
- JEFFAMINE M-1000 (Mw = 1000, HLB value = 16.1) manufactured by Huntsman (number of primary amino groups = 1, number of secondary amino groups = 0)

Example 1

In a 200 ml four-necked flask equipped with a condenser, a thermometer, and a stirrer, 20 g of CPO-1 obtained in Production Example 2 as the acid-modified polyolefin resin (A) and 80 g of urethane acrylate 1 as the compound having a polymerizable unsaturated group (B) were placed. Then, the internal temperature was raised to 90°C, and the mixture was stirred for 1 hour. Then, the mixture was cooled to room temperature and filtered through a wire mesh with an opening of 149 μm, thereby obtaining a modified polyolefin resin composition (a). In Example 1, the polyetheramine (C) was not used.

Examples 2 to 16 and Comparative Example 2

Modified polyolefin resin compositions (b) to (p) and (r) were obtained in the same manner as in Example 1, except that the amounts of the acid-modified polyolefin resin (A), compound having a polymerizable unsaturated group (B), and polyetheramine (C) were changed as shown in Table 1. In Examples 2 to 8, 20 g of CPO-1 obtained in Production Example 2 was used, whereas in Examples 9 to 16, 20 g of MPO-1 obtained in Production Example 1 was used. In Examples 2 to 7 and Comparative Example 2, the polyetheramine (C) was not used; in Examples 8 to 15, 8 g of the polyetheramine (C) was used; and in Example 16, 4 g of the polyetheramine (C) was used.

Comparative Example 1

In a 200 ml four-necked flask equipped with a condenser, a thermometer, and a stirrer, 100 g of urethane acrylate 1 as the compound having a polymerizable unsaturated group with an elongation at break of 30% or more (B) was placed. Then, the internal temperature was raised to 90°C, and the mixture was dissolved by heating for 1 hour. Then, the mixture was cooled to room temperature and filtered through a wire mesh with an opening of 149 μm, thereby obtaining a resin composition (q). In Comparative Example 1, the acid-modified polyolefin resin (A) and the polyetheramine (C) were not used.

(1) Evaluation of Fluidity at 25°C and 80°C

The modified polyolefin resin compositions obtained in Examples 1 to 16 and Comparative Example 2 and the resin composition obtained in Comparative Example 1 were visually evaluated for fluidity at 25°C and 80°C immediately after production, fluidity at 25°C and 80°C the next day (24 hours after production), and fluidity at 25°C and 80°C after a week (168 hours after production). A composition with fluidity after a week was rated "A," a composition with fluidity the next day was rated "B," a composition with fluidity only immediately after production was rated "C," and a composition with no fluidity immediately after production was rated "D."

(2) Evaluation of Adhesion

Tert-butyl-2-ethylperoxyhexanoate was added in an amount of 2% relative to the compound having a polymerizable unsaturated group (B) in 5 g of the respective modified polyolefin resin compositions obtained in Examples 1 to 16 and Comparative Example 2, and relative to the compound having a polymerizable unsaturated group (B) in 5 g of the resin composition obtained in Comparative Example 1. The mixture was then stirred for 30 minutes at room temperature using a magnetic stirrer. The mixture obtained by stirring was applied to a PP (polypropylene) bumper substrate, which had been washed with isopropyl alcohol, so that the coating film after drying had a thickness of about 100 μm. After baking at 110°C for 3 minutes, the substrate was left to stand for 72 hours in an atmosphere at a temperature of 25°C and 60% relative humidity to prepare a cured coating film, which was to be used as a test plate. A grid of 100 squares was made on the test plate with 1 mm intervals, reaching the base. Cellophane tape was pressed onto the squares and then peeled off at an angle of 90 degrees relative to the coated surface. This operation was performed three times. A coating film with no peeling even after three tries was rated "A." A coating film that had peeled after the third try was rated "B." A coating film that had peeled after the first or second try was rated "C."

(3) Evaluation of Water Resistance

Tert-butyl-2-ethylperoxyhexanoate was added in an amount of 2% relative to the compound having a polymerizable unsaturated group (B) in 5 g of the respective modified polyolefin resin compositions obtained in Examples 1 to 16 and Comparative Example 2, and relative to the compound having a polymerizable unsaturated group (B) in 5 g of the resin composition obtained in Comparative Example 1. The mixture was then stirred for 30 minutes at room temperature using a magnetic stirrer. The mixture obtained by stirring was applied at room temperature to a PP (polypropylene) bumper substrate, which had been washed with isopropyl alcohol, so that the coating film after drying had a thickness of about 100 μm. After baking at 110°C for 3 minutes, the substrate was left to stand for 72 hours in an atmosphere of 25°C and 60% relative humidity to prepare a cured coating film, which was to be used as a test plate. The obtained test plate was immersed in warm water at 40°C for 10 days (240 hours). After immersion, a grid of 100 squares was made on the test plate with 1 mm intervals, reaching the base. Cellophane tape was pressed onto the squares and then peeled off at an angle of 90 degrees relative to the coated surface. This operation was performed three times. A coating film with no peeling even after three tries was rated "A." A coating film that had peeled after the third try was rated "B." A coating film that had peeled after the first or second try was rated "C."

(4) Bending Resistance

A cured coating film prepared in the same manner as in (2) Evaluation of Adhesion was subjected to a bending resistance test using a cylindrical mandrel with a diameter of 20 mm in accordance with JIS K 5600-5-1:1999 (bending resistance). The bending resistance of the cured coating film was evaluated based on the following criteria.

A: No cracks occurred.
B: Cracks occurred in a very small area.
C: Cracks occurred over the entire surface.

(5) Elongation at Break

Tert-butyl-2-ethylperoxyhexanoate was added in an amount of 2% relative to the respective compounds having a polymerizable unsaturated group (B) in 10 g of the modified polyolefin resin composition obtained in Examples 1 to 16 and Comparative Example 2 and relative to the compound having a polymerizable unsaturated group (B) in 10 g of the resin composition obtained in Comparative Example 1. The mixture was then stirred for 30 minutes at room temperature using a magnetic stirrer. The mixture solution was applied onto a Teflon (registered trademark) sheet and heated at 110°C for 1 minute to produce a cured coating film with a thickness of 100 μm. The elongation of the thus-prepared cured coating films

was measured using a tensile tester (Tensilon RTM-100 manufactured by Orientec Corporation) until the films were fractured under the following conditions: a width of 10 mm, a grip-to-grip distance of 30 mm, a tensile speed of 100 mm/min, an atmosphere at a temperature of 20°C and a relative humidity of 65%. The elongation at break of the modified polyolefin resin compositions obtained in Examples 1 to 16 and Comparative Example 2, as well as the resin composition obtained in Comparative Example 1, was calculated according to the following method.

Elongation at break (%) = 100 × {(length at break) - (initial length before tensile test)}/initial length before tensile test

Table 1 below shows the raw materials and their amounts used in the Examples and Comparative Examples, the evaluation results of the modified polyolefin resin compositions (a) to (p) obtained in Examples 1 to 16, the evaluation results of the resin composition (q) obtained in Comparative Example 1, and the evaluation results of the modified polyolefin resin composition (r) obtained in Comparative Example 2.

Table 1

| | | | Ex 1 | Ex 2 | Ex 3 | Ex 4 | Ex 5 | Ex 6 | Ex 7 | Ex 8 | Ex 9 | Ex 10 | Ex 11 | Ex 12 | Ex 13 | Ex 14 | Ex 15 | Ex 16 | Comp. Ex 1 | Comp. Ex 2 |
|---|---|---|---|---|---|---|---|---|---|---|---|---|---|---|---|---|---|---|---|---|
| Modified Polyolefin Resin Composition | | | (a) | (b) | (c) | (d) | (e) | (f) | (g) | (h) | (i) | (j) | (k) | (l) | (m) | (n) | (o) | (p) | (q) | (r) |
| Acid-modified Polyolefin Resin (A) | | CPO-1 | 20 | 20 | 20 | 20 | 20 | 20 | 20 | 20 | | | | | | | | | | 20 |
| | | MPO-1 | | | | | | | | | 20 | 20 | 20 | 20 | 20 | 20 | 20 | 20 | | |
| Compound Having Polymerizable Unsaturated Group (B) | (B-1) | Urethane Acrylate 1 (Elongation at Break=790%) | 80 | 20 | | | | 50 | 40 | 80 | 5 | 80 | 40 | 20 | 20 | 20 | 20 | 20 | 100 | |
| | | Urethane Acrylate 2 (Elongation at Break=460%) | | | 20 | | | | | | | | | | | | | | | |
| | | Polyester Acrylate (Elongation at Break=50%) | | | | 20 | | | | | | | | | | | | | | |
| | | Vinyl Ester (Elongation at Break=550%) | | | | | 20 | | | | | | | | | | | | | |
| | (B-21) | 4-Tert-butylcyclohexyl Acrylate (Mw=210, Elongation at Break=1%) | | 60 | 60 | 60 | 60 | | | | | | 40 | | | | 15 | | | 80 |
| | | 1,9-Nonanediol Diacrylate (Mw=268, Elongation at Break=12%) | | | | | | | | | 45 | | | 30 | | 30 | | 20 | | |
| | | Polypropylene Glycol Diacrylate (Number of Repeating Units =12, Mw=808, Elongation at Break=9%) | | | | | | | | | | | | | 30 | | | | | |
| | (B-211) | 2-Hydroxy-3-methacrylpropyl Acrylate (Mw=214, Elongation at Break=2%) | | | | | | 30 | | | 30 | | | 30 | 30 | | 15 | | | |
| | (B-221) | Acetoacetoxyethyl Methacrylate (Mw=214, Elongation at Break=3%) | | | | | | | 40 | | | | | | | 30 | 30 | 40 | | |
| Polyetheramine (C) | | JEFFAMINE M-2070 (Mw=2000, HLB Value=13.8, Number of Primary Amino Groups=1, Number of Secondary Amino Groups=0) | | | | | | | | 8 | 8 | 8 | 8 | 8 | 8 | 8 | 8 | | | |
| | | JEFFAMINE M-1000 (Mw=1000, HLB Value=15.1, Number of Primary Amino Groups=1, Number of Secondary Amino Groups=0) | | | | | | | | | | | | | | | | 4 | | |
| Evaluation Results | | Fluidity at 25°C | C | A | B | C | A | B | B | B | B | C | B | A | B | B | A | B | B | C |
| | | Fluidity at 80°C | C | A | B | B | A | B | B | B | A | C | B | A | B | A | A | B | B | B |
| | | Adhesion | A | A | A | A | A | A | A | A | A | A | A | A | A | A | A | A | C | A |
| | | Water Resistance | A | A | A | A | A | A | A | A | A | A | A | A | A | A | A | A | C | A |
| | | Bending Resistance | A | A | A | B | A | A | A | A | B | A | A | A | A | A | A | A | A | C |
| | | Elongation at Break | 380% | 120% | 90% | 50% | 450% | 220% | 200% | 390% | 20% | 400% | 220% | 180% | 200% | 100% | 90% | 250% | 790% | 2% |

Discussion of Results Shown in Table 1

The modified polyolefin resin compositions obtained in Examples 1 to 16 were shown to maintain fluidity immediately after production at both 25°C and 80°C. It was also demonstrated that the modified polyolefin resin compositions obtained in Examples 1 to 16 exhibited excellent adhesion to a PP (polypropylene) bumper substrate. Moreover, the modified polyolefin resin compositions obtained in Examples 1 to 16 were shown to have excellent water

resistance. Furthermore, the modified polyolefin resin compositions obtained in Examples 1 to 16 were shown to have excellent bending resistance. On the other hand, the resin composition obtained in Comparative Example 1 resulted in significantly poor adhesion and water resistance due to the absence of the acid-modified polyolefin resin (A). Comparative Example 2, in which the compound having a polymerizable unsaturated group with an elongation at break of 30% or more (B-1) was not used, resulted in significantly poor bending resistance.

**Claims**

1. A modified polyolefin resin composition comprising an acid-modified polyolefin resin (A) and a compound having a polymerizable unsaturated group (B),
wherein the compound having a polymerizable unsaturated group (B) comprises a compound having a polymerizable unsaturated group with an elongation at break of 30% or more (B-1).

2. The modified polyolefin resin composition according to claim 1,
wherein the acid-modified polyolefin resin (A) is contained in an amount of 10 to 50 parts by mass, per 100 parts by mass of the compound having a polymerizable unsaturated group (B) .

3. The modified polyolefin resin composition according to claim 1,
wherein the compound having a polymerizable unsaturated group with an elongation at break of 30% or more (B-1) is at least one compound selected from the group consisting of urethane (meth)acrylate, epoxy (meth)acrylate, polyester (meth)acrylate, polyether (meth)acrylate, and vinyl ester.

4. The modified polyolefin resin composition according to claim 1,
wherein the compound having a polymerizable unsaturated group (B) comprises a compound having a polymerizable unsaturated group with an elongation at break of less than 30% (B-2).

5. The modified polyolefin resin composition according to claim 4,
wherein the ratio by mass of the compound having a polymerizable unsaturated group with an elongation at break of 30% or more (B-1) to the compound having a polymerizable unsaturated group with an elongation at break of less than 30% (B-2) is the following: (B-1):(B-2) = 99:1 to 5:95.

6. The modified polyolefin resin composition according to claim 4,
wherein the compound having a polymerizable unsaturated group with an elongation at break of less than 30% (B-2) comprises a compound having an alkyleneoxy group and/or a linear or branched alkyl group having 1 to 20 carbon atoms, and one or more polymerizable unsaturated groups (B-21).

7. The modified polyolefin resin composition according to claim 4,
wherein the compound having a polymerizable unsaturated group with an elongation at break of less than 30% (B-2) comprises a compound having a hydroxyl group and one or more polymerizable unsaturated groups (B-211).

8. The modified polyolefin resin composition according to claim 4,
wherein the compound having a polymerizable unsaturated group with an elongation at break of less than 30% (B-2) comprises a compound containing a unit with a carbonyl group and one or more polymerizable unsaturated groups (B-22).

9. The modified polyolefin resin composition according to claim 8,
wherein the unit with a carbonyl group is represented by the following formula (1) or (2):

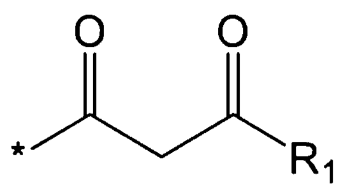

(1)

wherein
$R_1$ represents a hydrogen atom or a methyl group, and asterisk * represents a binding site,

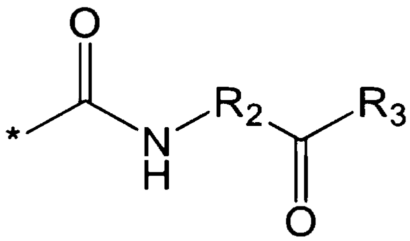

(2)

wherein

$R_2$ represents an optionally substituted hydrocarbon group having 1 to 10 carbon atoms,
$R_3$ represents a hydrogen atom, or an optionally substituted hydrocarbon group having 1 to 10 carbon atoms, and asterisk * represents a binding site,

with the proviso that the optionally substituted hydrocarbon groups having 1 to 10 carbon atoms represented by $R_2$ and $R_3$ may each independently further have a branched structure, an alicyclic structure, or an aromatic ring structure.

**10.** The modified polyolefin resin composition according to claim 1,
wherein the modified polyolefin resin composition comprises a polyetheramine (C).

**11.** The modified polyolefin resin composition according to claim 10,
wherein the polyetheramine (C) is contained in an amount of 6 to 100 parts by mass, per 100 parts by mass of the acid-modified polyolefin resin (A).

**12.** The modified polyolefin resin composition according to claim 10,

wherein the polyetheramine (C) has a primary amino group or a secondary amino group at one end thereof, and
wherein the polyetheramine (C) has a weight average molecular weight (Mw) of 200 to 50000.

**13.** A cured product obtained by curing the modified polyolefin resin composition of any one of claims 1 to 12.

**14.** An ink comprising the modified polyolefin resin composition of any one of claims 1 to 12.

**15.** An adhesive comprising the modified polyolefin resin composition of any one of claims 1 to 12.

**16.** A primer comprising the modified polyolefin resin composition of any one of claims 1 to 12.

**17.** A paint comprising the modified polyolefin resin composition of any one of claims 1 to 12.

**18.** An in-mold coating paint comprising the modified polyolefin resin composition of any one of claims 1 to 12.

**INTERNATIONAL SEARCH REPORT**

International application No. **PCT/JP2024/021938**

**A. CLASSIFICATION OF SUBJECT MATTER**

***C08F 255/00***(2006.01)i; ***C08F 2/44***(2006.01)i; ***C08L 23/26***(2006.01)i; ***C08L 101/00***(2006.01)i; ***C09D 5/00***(2006.01)i; ***C09D 11/102***(2014.01)i; ***C09D 11/106***(2014.01)i; ***C09D 123/00***(2006.01)i; ***C09D 163/10***(2006.01)i; ***C09D 167/06***(2006.01)i; ***C09D 175/14***(2006.01)i; ***C09J 123/00***(2006.01)i; ***C09J 163/10***(2006.01)i; ***C09J 167/06***(2006.01)i; ***C09J 175/14***(2006.01)i

FI: C08F255/00; C08L23/26; C08F2/44 C; C09J123/00; C09D11/106; C09D123/00; C09J175/14; C09J163/10; C09J167/06; C09D11/102; C09D175/14; C09D163/10; C09D167/06; C09D5/00 D; C08L101/00

According to International Patent Classification (IPC) or to both national classification and IPC

**B. FIELDS SEARCHED**

Minimum documentation searched (classification system followed by classification symbols)

C08F255/00; C08F2/44; C08L23/26; C08L101/00; C09D5/00; C09D11/102; C09D11/106; C09D123/00; C09D163/10; C09D167/06; C09D175/14; C09J123/00; C09J163/10; C09J167/06; C09J175/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7-082328 A (SANYO CHEMICAL INDUSTRIES, LTD.) 28 March 1995 (1995-03-28) claims, paragraph [0010], tables 1-2, example 2, etc. | 1-2, 4-8, 13, 15 |
| X | WO 2007/142067 A1 (KANEKA CORP.) 13 December 2007 (2007-12-13) claims, tables 1-2, examples 2, 6-7, etc. | 13, 15, 17 |
| A | WO 2022/181204 A1 (MITSUBISHI CHEMICAL CORPORATION) 01 September 2022 (2022-09-01) | 1-18 |
| A | JP 2006-036920 A (TOYO KASEI KOGYO CO., LTD.) 09 February 2006 (2006-02-09) | 1-18 |
| A | JP 8-041262 A (TONEN KAGAKU KK) 13 February 1996 (1996-02-13) | 1-18 |
| A | JP 5-039385 A (SHOWA DENKO K.K.) 19 February 1993 (1993-02-19) | 1-18 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/021938**

| Patent document cited in search report | Publication date (day/month/year) | Patent family member(s) | Publication date (day/month/year) |
|---|---|---|---|
| JP 7-082328 A | 28 March 1995 | (Family: none) | |
| WO 2007/142067 A1 | 13 December 2007 | US 2007/0282080 A1<br>claims, tables 1-2, examples 2, 6-7, etc.<br>EP 2025715 A1 | |
| WO 2022/181204 A1 | 01 September 2022 | CN 116529083 A | |
| JP 2006-036920 A | 09 February 2006 | US 2008/0287594 A1<br>EP 1772488 A1<br>CN 1989200 A<br>KR 10-2007-0046105 A | |
| JP 8-041262 A | 13 February 1996 | (Family: none) | |
| JP 5-039385 A | 19 February 1993 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002201236 A
- JP 2003019731 A